# EUROPEAN PATENT APPLICATION

(11) **EP 4 443 936 A1**
(43) Date of publication of application: **09.10.2024**
(21) Application number: 22909719.1
(22) Date of filing: 05.12.2022
(51) Int. Cl.: H04W 24/02

(54) **COMMUNICATION METHOD AND DEVICE**

(30) Priority: 20.12.2021 CN 202111562237; 10.01.2022 CN 202210022645; 28.01.2022 CN 202210108407
(71) Applicant: Huawei Technologies Co., Ltd., Shenzhen, Guangdong 518129 (CN)
(72) Inventor: YAO, Chuting, Shenzhen, Guangdong 518129 (CN); XU, Haibo, Shenzhen, Guangdong 518129 (CN); CAI, Yu, Shenzhen, Guangdong 518129 (CN); XUE, Lixia, Shenzhen, Guangdong 518129 (CN)
(74) Representative: Maiwald GmbH
(86) International application number: PCT/CN2022/136575
(87) International publication number: WO 2023/116404

(57) **Abstract**

This application relates to a communication method and device. A remote device receives configuration information from a first access network device, where the configuration information is used to configure a measurement frequency on a sidelink, and configure cell information or air interface frequency information. The remote device measures a first-type relay device based on the configuration information, where the first-type relay device is a relay device that works on the measurement frequency and has camped on or can camp on a cell corresponding to the cell information; or the first-type relay device is a relay device that works on the measurement frequency and has camped on or can camp on a cell at a frequency corresponding to the air interface frequency information. The remote device sends a measurement result to the first access network device, to determine a communication path of the remote device. The first access network device can learn frequency information of a cell in which a relay terminal device is located, so that a more appropriate relay terminal device can be selected when the first access network device selects a relay terminal device for the remote device.

## Description

### CROSS-REFERENCE TO RELATED APPLICATIONS

This application claims priority to Chinese Patent Application No. 202111562237.5, filed with the China National Intellectual Property Administration on December 20, 2021 and entitled "COMMUNICATION METHOD AND DEVICE", which is incorporated herein by reference in its entirety. This application claims priority to Chinese Patent Application No. 202210022645.X, filed with the China National Intellectual Property Administration on January 10, 2022 and entitled "COMMUNICATION METHOD AND DEVICE", which is incorporated herein by reference in its entirety. This application claims priority to Chinese Patent Application No. 202210108407.0, filed with the China National Intellectual Property Administration on January 28, 2022 and entitled "COMMUNICATION METHOD AND DEVICE", which is incorporated herein by reference in its entirety.

### TECHNICAL FIELD

This application relates to the field of communication technologies, and in particular, to a communication method and device.

### BACKGROUND

When user equipment (user equipment, UE) is far away from a network device, for example, the UE is not in a coverage area of the network device, or the UE is at a coverage edge of the network device, or quality of a link between the UE and the network device is poor, the UE may communicate with the network device by using another UE. To be specific, the another UE may provide a relay service for the UE, so that the UE can communicate with the network device. The UE that communicates with the network device by using the another UE may be referred to as remote (remote) UE, and the UE that provides the relay service for the remote UE may be referred to as relay (relay) UE.

When the remote UE is connected to a network by using the relay UE, the remote UE may determine whether the remote UE can continue to serve as the remote UE. Therefore, the remote UE may measure a cell in which or on which the relay UE works or camps, to perform determining based on a measurement result. To measure a cell in which or on which the relay UE works or camps, the cell in which or on which the relay UE works or camps needs to be first determined. Specifically, the remote UE may perform blind search on each frequency, and search for a corresponding cell based on a known physical cell identity (physical cell identity, PCI) of the cell in which or on which the relay UE works or camps. After determining a cell, the remote UE determines, by reading a system information block 1 (system information block 1, SIB 1) of the cell, whether a new radio cell identity (new radio cell Identity, NCI) broadcast in the SIB 1 is the same as an NCI obtained from the relay UE. If the two NCIs are the same, the remote UE can determine that the cell is the cell in which or on which the relay UE works or camps. Alternatively, if the two NCIs are different, the remote UE needs to continue searching.

It can be learned that, currently, it takes a long time for the remote UE to search for the cell in which or on which the relay UE works or camps. In addition, power consumption is high because the remote UE needs to perform blind search on a plurality of frequencies.

### SUMMARY

Embodiments of this application provide a communication method and device, to reduce power consumption of remote UE.

According to a first aspect, a first communication method is provided. The method may be performed by a terminal device, or may be performed by a larger device including the terminal device, or may be performed by a chip system or another functional module. The chip system or the functional module can implement a function of the terminal device. The chip system or the functional module is, for example, disposed in the terminal device. The method includes: obtaining frequency information of a first cell, where the first cell is a cell in which a first relay device is located; determining the first cell based on the frequency information of the first cell and an identifier of the first cell; and measuring the first cell, to determine whether the terminal device can serve as a remote device in the first cell.

In this embodiment of this application, the terminal device can obtain the frequency information of the cell in which the first relay device is located, and can further determine the cell based on the frequency information and the identifier of the cell. In this way, there is no need to perform blind search on a plurality of frequencies. This reduces a process of blindly searching for frequencies, and reduces time required for searching for a cell. In addition, because the process of blindly searching for frequencies is reduced, power consumption of the terminal device is also reduced.

With reference to the first aspect, in a first optional implementation of the first aspect, the identifier of the first cell includes a PCI of the first cell and/or an NCI of the first cell. There may be a plurality of types of identifiers of the first cell. This is not limited in this embodiment of this application.

With reference to the first aspect or the first optional implementation of the first aspect, in a second optional implementation of the first aspect, the obtaining frequency information of a first cell includes: receiving a first message from the first relay device, where the first message includes or indicates the frequency information of the first cell. The first relay device sends the first message, so that the terminal device can receive the first message. The terminal device does not need to send a message to the first relay device, so that signaling overheads can be reduced. For example, the first relay device may send the first message in a broadcast manner, a unicast manner, or the like.

With reference to the first aspect or the first optional implementation of the first aspect, in a third optional implementation of the first aspect, the obtaining frequency information of a first cell includes: sending a second message to the first relay device, where the second message is used to query frequency information of the cell in which the first relay device is located, or is used to query whether the first relay device has camped on a cell at a first frequency, and the first cell is the cell at the first frequency; and receiving a first message from the first relay device, where the first message includes or indicates the frequency information of the first cell, or the first message indicates that the first relay device has camped on the cell at the first frequency. The terminal device may send the second message. For example, relay devices (for example, the first relay device) that meet a condition queried in the second message may reply with messages, so that the relay devices can be selected, thereby reducing a process in which the terminal device measures a relay device that does not meet the condition or the like, and reducing power consumption of the terminal device.

With reference to the second optional implementation of the first aspect or the third optional implementation of the first aspect, in a fourth optional implementation of the first aspect, the first message is as follows: a discovery message, or a PC5 RRC message, or an RRC message from a serving access network device of the first relay device. For example, the first message is the discovery message. In this case, the terminal device can receive the first message before establishing a connection to the first relay device, so that efficiency of obtaining a frequency of the first cell by the terminal device can be improved. Alternatively, the first message is the PC5 RRC message. In this case, the terminal device may receive the first message after establishing a connection to the first relay device, so that the first message can be sent more pertinently. Alternatively, the first message is from the serving access network device of the first relay device. This is equivalent to the following: The frequency information of the first cell may alternatively be notified by a network to the terminal device. Therefore, the terminal device obtains the frequency information of the first cell in a flexible manner.

With reference to any one of the second optional implementation of the first aspect to the fourth optional implementation of the first aspect, in a fifth optional implementation of the first aspect, the first message further includes the identifier of the first cell. For example, the identifier of the first cell is carried in the first message and is sent together with the first message. In this way, the terminal device can obtain the frequency information of the first cell and the identifier of the first cell based on one message. This helps reduce signaling overheads. Alternatively, the identifier of the first cell may not be included in the first message, but is sent to the terminal device through another message. The message is, for example, from the first relay device, or from the serving access network device of the first relay device. This is not specifically limited.

With reference to any one of the second optional implementation of the first aspect to the fifth optional implementation of the first aspect, in a sixth optional implementation of the first aspect, the first message further includes first information, where the first information indicates that the first cell is not in an access-barred state. Based on the first information, the terminal device may determine, as early as possible, whether access to the first cell is allowed, thereby reducing a probability of accessing an inappropriate cell as much as possible.

With reference to any one of the second optional implementation of the first aspect to the sixth optional implementation of the first aspect, in a seventh optional implementation of the first aspect, the first message further includes second information, where the second information indicates whether searching for an accessible cell at a frequency of the first cell is allowed when the first cell is in the access-barred state. For example, all other cells at the frequency of the first cell may have heavy loads, or all other cells at the frequency of the first cell may be in the access-barred state. In this case, the second information may indicate that searching for an accessible cell at the frequency of the first cell is not allowed. In this way, an invalid search process of the terminal device can be reduced, and power consumption of the terminal device can be reduced.

With reference to the first aspect or any one of the first optional implementation of the first aspect to the seventh optional implementation of the first aspect, in an eighth optional implementation of the first aspect, the method further includes: after establishing a connection to the first relay device, receiving the PCI of the first cell from the first relay device; or sending a first request message to an access network device, and receiving the PCI of the first cell from the access network device, where the first request message is used to request to establish a connection to the access network device. The terminal device may obtain the PCI of the first cell in a plurality of manners, for example, receive the PCI of the first cell from the first relay device, or may receive the PCI of the first cell from the access network device. The access network device is, for example, an access network device on which the terminal device camps or works, or may be an access network device (for example, the serving access network device of the first relay device) on which the first relay device camps or works.

According to a second aspect, a second communication method is provided. The method may be performed by a terminal device, or may be performed by a larger device including the terminal device, or may be performed by a chip system or another functional module. The chip system or the functional module can implement a function of the terminal device. The chip system or the functional module is, for example, disposed in the terminal device. For example, the terminal device is a relay device, and the relay device is, for example, a first relay device. The method includes: sending frequency information of a first cell to a terminal device, where the frequency information of the first cell is used to determine whether the terminal device can serve as a remote device in the first cell, and the first cell is a cell in which the first relay device is located.

With reference to the second aspect, in a first optional implementation of the second aspect, the sending frequency information of a first cell to a terminal device includes: sending a first message to the terminal device, where the first message includes the frequency information of the first cell.

With reference to the second aspect, in a second optional implementation of the second aspect, the sending frequency information of a first cell to a terminal device includes: receiving a second message from the terminal device, where the second message is used to query frequency information of the cell in which the first relay device is located, or is used to query whether the first relay device has camped on a cell at a first frequency, and the first cell is the cell at the first frequency; and sending a first message to the terminal device, where the first message includes the frequency information of the first cell, or the first message indicates that the first relay device has camped on the cell at the first frequency.

With reference to the first optional implementation of the second aspect or the second optional implementation of the second aspect, in a third optional implementation of the second aspect, the first message is as follows: a discovery message, or a PC5 RRC message, or an RRC message from a serving access network device of the first relay device.

With reference to any one of the first optional implementation of the second aspect to the third optional implementation of the second aspect, in a fourth optional implementation of the second aspect, the first message further includes an identifier of the first cell, where the identifier of the first cell includes a PCI of the first cell or an NCI of the first cell.

With reference to any one of the first optional implementation of the second aspect to the fourth optional implementation of the second aspect, in a fifth optional implementation of the second aspect, the first message further includes first information, where the first information indicates that the first cell is not in an access-barred state.

With reference to any one of the first optional implementation of the second aspect to the fifth optional implementation of the second aspect, in a sixth optional implementation of the second aspect, the first message further includes second information, where the second information indicates whether searching for an accessible cell at a frequency of the first cell is allowed when the first cell is in the access-barred state.

With reference to the second aspect or any one of the first optional implementation of the second aspect to the sixth optional implementation of the second aspect, in a seventh optional implementation of the second aspect, the method further includes: after establishing a connection to the terminal device, sending the PCI of the first cell to the terminal device.

For technical effects brought by the second aspect or the optional implementations, refer to descriptions of the technical effects brought by the first aspect or the corresponding implementations.

According to a third aspect, a third communication method is provided. The method may be performed by a terminal device, or may be performed by a larger device including the terminal device, or may be performed by a chip system or another functional module. The chip system or the functional module can implement a function of the terminal device. The chip system or the functional module is, for example, disposed in the terminal device. The terminal device is, for example, a remote device. The method includes: receiving configuration information from a first access network device, where the configuration information is used to configure a measurement frequency on a sidelink, and configure cell information or air interface frequency information; measuring a first-type relay device based on the configuration information, where the first-type relay device is a relay device that works on the measurement frequency and has camped on or can camp on a cell corresponding to the cell information, or the first-type relay device is a relay device that works on the measurement frequency and has camped on or can camp on a cell at a frequency corresponding to the air interface frequency information; and sending a measurement result to the first access network device, where the measurement result is used to determine a communication path of the remote device.

In this embodiment of this application, the first access network device can learn frequency information of a cell in which a relay terminal device is located, so that the first access network device can select a more appropriate relay terminal device when selecting a relay terminal device for the remote device. For example, the first access network device may select, for the remote device, a relay terminal device that works on a high frequency on an air interface, so that a data rate of the remote device can be improved. In addition, the remote device may perform communication through a single-connectivity communication path, or may perform communication through a multi-connectivity communication path. This improves communication flexibility of the remote device, and also helps improve a throughput rate of the remote device.

With reference to the third aspect, in a first optional implementation of the third aspect, the method further includes: receiving a fourth message from a first relay device, where the fourth message includes information about a first frequency, and the first frequency is a frequency of a cell in which the first relay device is located or a frequency of a cell on which the first relay device can camp. In this manner, the remote device can obtain, without sending a message to a relay terminal device, the information about the first frequency based on a message received from the relay terminal device, so that signaling overheads can be reduced.

With reference to the first optional implementation of the third aspect, in a second optional implementation of the third aspect, the fourth message is a discovery message or a PC5 RRC message. For example, the fourth message is the discovery message, or the PC5 RRC message, or may be a message of another type. This is not limited in this embodiment of this application.

With reference to the first optional implementation of the third aspect or the second optional implementation of the third aspect, in a third optional implementation of the third aspect, the measuring a first-type relay device based on the configuration information includes: measuring or measuring and reporting the first relay device if the first frequency belongs to a frequency corresponding to the air interface frequency information configured based on the configuration information, or a cell corresponding to the cell information configured based on the configuration information belongs to the first frequency. If the air interface frequency information is configured based on the configuration information, and the first frequency belongs to a frequency corresponding to the air interface frequency information configured based on the configuration information, it indicates that the first relay device is an object that needs to be measured. Alternatively, if the cell information is configured based on the configuration information, and a cell corresponding to the cell information configured based on the configuration information belongs to the first frequency (or the cell works on the first frequency), it also indicates that the first relay device is an object that needs to be measured. This is equivalent to the following: The remote device may measure an object configured based on the configuration information, to reduce an invalid measurement process of the remote device.

With reference to the third aspect, in a fourth optional implementation of the third aspect, the method further includes: sending a fifth message to the first relay device, where the fifth message is used to query frequency information of a cell in which the first relay device is located, or is used to query frequency information of a cell on which the first relay device can camp, or is used to query whether the first relay device has camped on or can camp on a cell at a second frequency, where the second frequency is a frequency corresponding to the air interface frequency information configured based on the configuration information; and receiving a sixth message from the first relay device, where the sixth message includes information about the second frequency, or the sixth message indicates that the first relay device has camped on or can camp on the cell at the second frequency. In this manner, the remote device may first send a message to the first relay device. For example, the message sent by the remote device is referred to as a fifth message. After receiving the fifth message, the first relay device may send a message, for example, referred to as the sixth message, to the remote device. The remote device may perform measurement based on the sixth message. Because corresponding information is queried in the fifth message, it may be more helpful for the remote device to locate proper relay terminal devices, to measure these relay terminal devices.

With reference to the third aspect or any one of the first optional implementation of the third aspect to the fourth optional implementation of the third aspect, in a fifth optional implementation of the third aspect, the method further includes: receiving an RRC reconfiguration message from the first access network device, where the RRC reconfiguration message indicates the remote device to hand over to a second cell, or indicates the remote device to hand over to the first relay device, or indicates the remote device to add a second cell as a secondary cell, or indicates the remote device to add a path for communicating with a network by using the first relay device, and the first relay device is one of the first-type relay devices. A new communication path may be indicated to the remote device based on the RRC reconfiguration message.

With reference to the fifth optional implementation of the third aspect, in a sixth optional implementation of the third aspect, the RRC reconfiguration message further includes a PCI of the cell in which the first relay device is located. For example, the second access network device may send the stored PCI of the cell in which the first relay device is located to the first access network device, and the first access network device may further transfer the PCI to the remote device. This provides an implementation in which the remote device obtains the PCI of the cell in which the first relay device is located.

With reference to the fifth optional implementation of the third aspect or the sixth optional implementation of the third aspect, in a seventh optional implementation of the third aspect, the RRC reconfiguration message further includes frequency information of the cell in which the first relay device is located. For example, the second access network device may send the frequency information of the cell in which the first relay device is located to the first access network device, and the first access network device may further transfer the frequency information to the remote device. This provides an implementation in which the remote device obtains the frequency information of the cell in which the first relay device is located.

With reference to the fifth optional implementation of the third aspect, in an eighth optional implementation of the third aspect, the method further includes: after establishing a connection to the first relay device, receiving, from the first relay device, a PCI of the cell in which the first relay device is located. There may be two manners in which the remote device obtains the PCI of the cell in which the first relay device is located. In one manner, the remote device obtains the PCI of the cell by using an access network device (for example, the first access network device). In the other manner, the remote device obtains the PCI of the cell by using the first relay device. The two manners may be applied separately, or may be applied in combination.

With reference to any one of the fifth optional implementation of the third aspect to the eighth optional implementation of the third aspect, in a ninth optional implementation of the third aspect, the method further includes: after establishing the connection to the first relay device, sending first indication information to the first relay device, where the first indication information indicates the first relay device to reselect a cell corresponding to the cell information configured based on the configuration information, or indicates the first relay device to reselect a cell at a frequency corresponding to the air interface frequency information configured based on the configuration information. If the first relay device can camp on only the cell corresponding to the configuration information, but currently does not camp on the cell corresponding to the configuration information, the remote device may send first indication information to the first relay device, to indicate the first relay device to reselect the cell corresponding to the configuration information, so that the first relay device can normally provide a relay service for the remote device.

With reference to the third aspect or any one of the first optional implementation of the third aspect to the ninth optional implementation of the third aspect, in a tenth optional implementation of the third aspect, the receiving configuration information from a first access network device includes: receiving, by using a second relay device, the configuration information from the first access network device. For example, the remote device may be initially connected to the first access network device by using the second relay device. In this case, the configuration information sent by the first access network device may be sent to the remote device by using the second relay device.

According to a fourth aspect, a fourth communication method is provided. The method may be performed by a terminal device, or may be performed by a larger device including the terminal device, or may be performed by a chip system or another functional module. The chip system or the functional module can implement a function of the terminal device. The chip system or the functional module is, for example, disposed in the terminal device. The terminal device is, for example, a first relay device. The method includes: sending information about a third frequency to a remote device, where the third frequency is a frequency of a cell in which the first relay device is located, or a frequency of a cell on which the first relay device can camp, and the information about the third frequency is used to determine a communication path of the remote device.

For technical effects brought by the fourth aspect, refer to the descriptions of the technical effects of the third aspect or the corresponding implementations.

According to a fifth aspect, a fifth communication method is provided. The method may be performed by a first access network device, or may be performed by a larger device including the first access network device, or may be performed by a chip system or another functional module. The chip system or the functional module can implement a function of the first access network device. The chip system or the functional module is, for example, disposed in the first access network device. The first access network device is, for example, a base station. The method includes: sending configuration information to a remote device, where the configuration information is used to configure a measurement frequency on a sidelink, and configure cell information or air interface frequency information of a cell on which or in which a relay device that works on the measurement frequency needs to camp or work; receiving a measurement result of the relay device from the remote device; and determining a communication path of the remote device based on the measurement result.

For technical effects brought by the fifth aspect, refer to the descriptions of the technical effects of the third aspect or the corresponding implementations.

According to a sixth aspect, a sixth communication method is provided. The method may be performed by a first access network device, or may be performed by a larger device including the first access network device, or may be performed by a chip system or another functional module. The chip system or the functional module can implement a function of the first access network device. The chip system or the functional module is, for example, disposed in the first access network device. The first access network device is, for example, a base station. The method includes: sending a handover request message to a second access network device, where the handover request message is used to query whether to accept that a remote device accesses a network by using a first relay device served by the second access network device, or the handover request message is used to query whether to accept that a remote device accesses a second cell served by the second access network device; and receiving a handover request response from the second access network device, where the handover request response indicates whether to accept that the remote device accesses the network by using the first relay device, or indicates whether to accept that the remote device accesses the second cell, and the handover request response further includes frequency information of a cell on which the first relay device has camped or can camp.

For technical effects brought by the sixth aspect, refer to the descriptions of the technical effects of the third aspect or the corresponding implementations.

According to a seventh aspect, a seventh communication method is provided. The method may be performed by a second access network device, or may be performed by a larger device including the second access network device, or may be performed by a chip system or another functional module. The chip system or the functional module can implement a function of the second access network device. The chip system or the functional module is, for example, disposed in the second access network device. The second access network device is, for example, a base station. The method includes: receiving a handover request message from a first access network device, where the handover request message is used to query whether to accept that a remote device accesses a network by using a first relay device served by the second access network device, or the handover request message is used to query whether to accept that a remote device accesses a second cell served by the second access network device; and sending a handover request response to the first access network device, where the handover request response indicates whether to accept that the remote device accesses the network by using the first relay device, or indicates whether to accept that the remote device accesses the second cell, and the handover request response further includes frequency information of a cell on which the first relay device has camped or can camp.

For technical effects brought by the seventh aspect, refer to the descriptions of the technical effects of the third aspect or the corresponding implementations.

According to an eighth aspect, an eighth communication method is provided. The method may be performed by a terminal device, or may be performed by a larger device including the terminal device, or may be performed by a chip system or another functional module. The chip system or the functional module can implement a function of the terminal device. The chip system or the functional module is, for example, disposed in the terminal device. The terminal device is, for example, a remote device. The method includes: receiving configuration information from an access network device, where the configuration information is used to configure a first-type measuring object and a second-type measuring object, and a communication path that is of the remote device and that corresponds to the first-type measuring object is different from a communication path that is of the remote device and that corresponds to the first-type measuring object; measuring the first-type measuring object based on the configuration information; and measuring the second-type measuring object if a measurement result of the first-type measuring object does not meet a first condition.

In this embodiment of this application, although the access network device may configure two types of measuring objects, the remote device determines, based on the first condition, a specific type of measuring object to be measured. In this case, the remote device may not need to measure both the two types of measuring objects, thereby reducing power consumption. In addition, the access network device does not need to separately configure a measuring object, and the remote device may determine a specific type of measuring object to be measured, thereby reducing a measurement delay.

According to a ninth aspect, a ninth communication method is provided. The method may be performed by a terminal device, or may be performed by a larger device including the terminal device, or may be performed by a chip system or another functional module. The chip system or the functional module can implement a function of the terminal device. The chip system or the functional module is, for example, disposed in the terminal device. The terminal device is, for example, a remote device. The method includes: receiving configuration information from an access network device, where the configuration information is used to configure a measurement event, the measurement event includes that a value of a measurement result of a first-type measuring object is less than a first threshold and that a value of a measurement result of a second-type measuring object is greater than or equal to a second threshold, and a communication path that is of the remote device and that corresponds to the first-type measuring object is different from a communication path that is of the remote device and that corresponds to the first-type measuring object; measuring the first-type measuring object and the second-type measuring object; and sending the measurement result of the first-type measuring object and/or the measurement result of the second-type measuring object to the access network device based on the measurement event.

In this embodiment of this application, the access network device may select a preferably reported measurement result based on the configured measurement event, and the remote device may send the measurement result to the access network device based on the measurement event, so that the sent measurement result better meets a requirement of the access network device, thereby reducing redundant reporting of the remote device, and reducing transmission overheads.

According to a tenth aspect, a tenth communication method is provided. The method may be performed by a terminal device, or may be performed by a larger device including the terminal device, or may be performed by a chip system or another functional module. The chip system or the functional module can implement a function of the terminal device. The chip system or the functional module is, for example, disposed in the terminal device. The terminal device is, for example, a remote device. The method includes: receiving configuration information from an access network device, where the configuration information is used to configure a first measurement event, a second measurement event, and a third measurement event, the first measurement event includes that a value of a measurement result of a first-type measuring object is less than a first threshold, the second measurement event includes that a value of a measurement result of a second-type measuring object is greater than or equal to a second threshold, the third measurement event includes that the value of the measurement result of the first-type measuring object is greater than or equal to the first threshold, and a communication path that is of the remote device and that corresponds to the first-type measuring object is different from a communication path that is of the remote device and that corresponds to the first-type measuring object; measuring the first-type measuring object and the second-type measuring object; and sending the measurement result of the first-type measuring object and/or the measurement result of the second-type measuring object to the access network device based on the first measurement event, the second measurement event, and the third measurement event.

In this embodiment of this application, the access network device may select a preferably reported measurement result based on the configured measurement event, and the remote device may send the measurement result to the access network device based on the measurement event, so that the sent measurement result better meets a requirement of the access network device, thereby reducing redundant reporting of the remote device, and reducing transmission overheads.

According to an eleventh aspect, a communication apparatus is provided. The communication apparatus may be the terminal device, the remote device, or the first relay device according to any one of the first aspect to the tenth aspect. The communication apparatus has the function of the foregoing terminal device, the foregoing remote device, or the foregoing first relay device. The communication apparatus is, for example, the terminal device, the remote device, or the first relay device, or is a functional module in the remote device or the first relay device, for example, a baseband apparatus or a chip system. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional module, the functional module is referred to as the transceiver unit, and the functional module can implement a sending function and a receiving function. Alternatively, the sending unit and the receiving unit may be different functional modules, and the transceiver unit is a general term for these functional modules.

In an optional implementation, the communication apparatus further includes a storage unit. The processing unit is configured to: be coupled to the storage unit, and execute a program or instructions in the storage unit, to enable the communication apparatus to perform the function of the terminal device, the remote device, or the first relay device according to any one of the first aspect to the tenth aspect.

According to a twelfth aspect, a communication apparatus is provided. The communication apparatus may be the first access network device or the second access network device according to any one of the first aspect to the tenth aspect. The communication apparatus has the function of the first access network device or the second access network device. The communication apparatus is, for example, the first access network device or the second access network device, or is a functional module in the first access network device or the second access network device, for example, a baseband apparatus or a chip system. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). For an implementation of the transceiver unit, refer to the description in the eleventh aspect.

In an optional implementation, the communication apparatus further includes a storage unit. The processing unit is configured to: be coupled to the storage unit, and execute a program or instructions in the storage unit, to enable the communication apparatus to perform the function of the first access network device or the second access network device according to any one of the first aspect to the tenth aspect.

According to a thirteenth aspect, a computer-readable storage medium is provided. The computer-readable storage medium is configured to store a computer program or instructions. When the computer program is run or the instructions are run, the methods performed by the terminal device, the remote device, the first relay device, the first access network device, or the second access network device in the foregoing aspects are implemented.

According to a fourteenth aspect, a computer program product including instructions is provided. When the computer program product runs on a computer, the methods according to the foregoing aspects are implemented.

According to a fifteenth aspect, an apparatus is provided, including one or more units configured to perform the method according to any embodiment of this application.

According to a sixteenth aspect, a communication system is provided, including the communication apparatus configured to implement the function of the first access network device according to the twelfth aspect, and including the communication apparatus configured to implement the function of the second access network device according to the twelfth aspect.

Optionally, the communication system further includes the communication apparatus configured to implement the function of the remote device according to the eleventh aspect.

Optionally, the communication system further includes the communication apparatus configured to implement the function of the first relay device according to the eleventh aspect.

According to a seventeenth aspect, a communication system is provided, including the communication apparatus configured to implement the function of the terminal device or the remote device according to the eleventh aspect, and including the communication apparatus configured to implement the function of the first relay device according to the twelfth aspect.

### BRIEF DESCRIPTION OF DRAWINGS

FIG. 1 is a schematic diagram of an application scenario according to an embodiment of this application;
FIG. 2 to FIG. 6 are flowcharts of several communication methods according to embodiments of this application;
FIG. 7 is a schematic diagram of an apparatus according to an embodiment of this application; and
FIG. 8 is a schematic diagram of another apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The following describes some terms or concepts in embodiments of this application, to facilitate understanding by a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect a person, an object, a machine, and the like, and may be widely used in various scenarios. For example, the terminal device includes but is not limited to terminal devices in the following scenarios: cellular communication, device-to-device (device-to-device, D2D) communication, vehicle to everything (vehicle to everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), a remote medical (remote medical) scenario, a smart grid (smart grid), smart furniture, smart office, a smart wearable, smart transportation, a smart city (smart city), an uncrewed aerial vehicle, a robot, and the like. The terminal device may be sometimes referred to as user equipment (user equipment, UE), a terminal, an access station, a UE station, a remote station, a wireless communication device, a user apparatus, or the like. For ease of description, in embodiments of this application, an example in which the terminal device is the UE is used for description.

A network device in embodiments of this application may include, for example, an access network device and/or a core network device. The access network device is a device having a wireless transceiver function, and is configured to communicate with the terminal device. The access network device includes but is not limited to a base station (base transceiver station (base transceiver station, BTS), NodeB, eNodeB/eNB, or gNodeB/gNB), a transmission reception point (transmission reception point, TRP), a base station evolved after the 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks of a same access technology, or may support networks of different access technologies. The base station may include one or more co-site or non-co-site transmission reception points. The access network device may alternatively be a radio controller, a central unit (central unit, CU), and/or a distributed unit (distributed unit, DU) in a cloud radio access network (cloud radio access network, CRAN) scenario. The access network device may alternatively be a server or the like. For example, an access network device in a vehicle to everything (vehicle to everything, V2X) technology may be a road side unit (road side unit, RSU). The following provides descriptions by using an example in which the access network device is a base station. The base station may communicate with the terminal device, or may communicate with the terminal device through a relay station. The terminal device may communicate with a plurality of base stations in different access technologies. The core network device is configured to implement functions such as mobility management, data processing, session management, and policy and charging. Names of devices that implement core network functions in systems of different access technologies may be different. This is not limited in embodiments of this application. A 5G system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is the network device is used for describing the technical solutions provided in embodiments of this application.

In embodiments of this application, unless otherwise specified, a quantity of nouns represents "a singular noun or a plural noun", that is, "one or more". "At least one" means one or more, and "a plurality of" means two or more. The term "and/or" describes an association relationship between associated objects and indicates that three relationships may exist. For example, A and/or B may indicate the following three cases: Only A exists, both A and B exist, and only B exists. A and B each may be singular or plural. The character "/" generally indicates an "or" relationship between associated objects. For example, A/B indicates A or B. "At least one of the following items (pieces)" or a similar expression thereof refers to any combination of these items, including a singular item (piece) or any combination of plural items (pieces). For example, at least one item (piece) of a, b, or c indicates: a, b, c, a and b, a and c, b and c, or a, b, and c, where a, b, and c may be singular or plural.

Ordinal numerals such as "first" and "second" mentioned in embodiments of this application are used to distinguish between a plurality of objects, and are not intended to limit sizes, content, a sequence, a time sequence, priorities, importance degrees, or the like of the plurality of objects. For example, the first cell and the second cell may be a same cell, or may be different cells. In addition, such names do not indicate different locations, coverage ranges, corresponding access network devices, priorities, importance degrees, or the like of the two cells. In addition, step numbers in embodiments described in this application are merely used to distinguish between different steps, but are not used to limit a sequence of the steps. For example, S201 may occur before S202, may occur after S202, or may occur simultaneously with S202.

When camping on a cell, one UE may determine whether the UE can serve as remote UE in the cell. The UE may determine, based on signal strength of the cell, whether the UE can serve as remote UE in the cell. For example, the UE may determine, according to a specific threshold rule, whether a discovery message may be received and/or sent on a sidelink (sidelink, SL), to help further determine whether a threshold of an access stratum (access stratum, AS) is met. For example, based on base station configuration (for example, system information configuration), when signal quality of the UE in the cell on which the UE camps is lower than a value obtained by subtracting an offset (offset) from a threshold (for example, a highest threshold (threshHighRemote) of remote UE), it is considered that the UE may serve as remote UE in the cell. Alternatively, when signal quality of the UE in the cell on which the UE camps is higher than a threshold (for example, threshHighRemote), it is considered that the UE does not meet a condition for serving as remote UE in the cell. The offset is, for example, hystMaxRemote (hystMaxRemote).

If the remote UE can serve as remote UE in the cell on which the remote UE currently camps, the remote UE may search for and access relay UE, so that the remote UE may camp on a cell in which the relay UE is located. The cell in which the relay UE is located is, for example, a camping cell (camping cell) or a serving cell (serving cell) of the relay UE. For remote UE that camps, by using relay UE, on a cell in which the relay UE is located, an NCI of the cell in which the relay UE is located may be obtained by using a discovery message (discovery message) from the relay UE. An NCI is a unique cell ID within a public land mobile network (public land mobile network, PLMN). A most significant bit of the NCI indicates a unique gNB ID within the PLMN. A least significant bit indicates a cell ID under the gNB ID. Currently, the remote UE may further obtain a PCI of the cell in which the relay UE is located. The PCI is a unique cell ID at a Uu frequency on which the relay UE camps or works.

After the remote UE finds the relay UE and establishes a connection to the relay UE, the remote UE may determine whether the remote UE can continue to serve as the remote UE. Therefore, the remote UE may measure a cell in which or on which the relay UE works or camps, to perform determining based on a measurement result. To measure the cell in which or on which the relay UE works or camps, the cell in which or on which the relay UE works or camps needs to be first determined. Specifically, the remote UE may perform blind search on each frequency, and search for a corresponding cell based on a known PCI of the cell in which or on which the relay UE works or camps. After determining a cell, the remote UE determines, by reading a SIB 1 of the cell, whether an NCI broadcast in the SIB 1 is the same as an NCI obtained from the relay UE. If the two NCIs are the same, the remote UE can determine that the cell is the cell in which or on which the relay UE works or camps. Alternatively, if the two NCIs are different, the remote UE needs to continue searching.

It can be learned that, currently, it takes a long time for the remote UE to search for the cell in which or on which the relay UE works or camps. In addition, power consumption is high because the remote UE needs to perform blind search on a plurality of frequencies.

In view of this, the technical solutions in embodiments of this application are provided. In embodiments of this application, the terminal device can obtain the frequency information of the cell in which the first relay device is located, and can further determine the cell based on the frequency information and the PCI of the cell. In this way, there is no need to perform blind search on a plurality of frequencies. This reduces a process of blindly searching for frequencies, and reduces time required for searching for a cell. In addition, because the process of blindly searching for frequencies is reduced, power consumption of the terminal device is also reduced.

The technical solutions provided in embodiments of this application may be applied to the 4th generation (the 4th generation, 4G) mobile communication technology system, for example, a long term evolution (long term evolution, LTE) system, or may be applied to a 5G system, for example, a new radio (new radio, NR) system, or may be further applied to a next-generation mobile communication system or another similar communication system. This is not specifically limited.

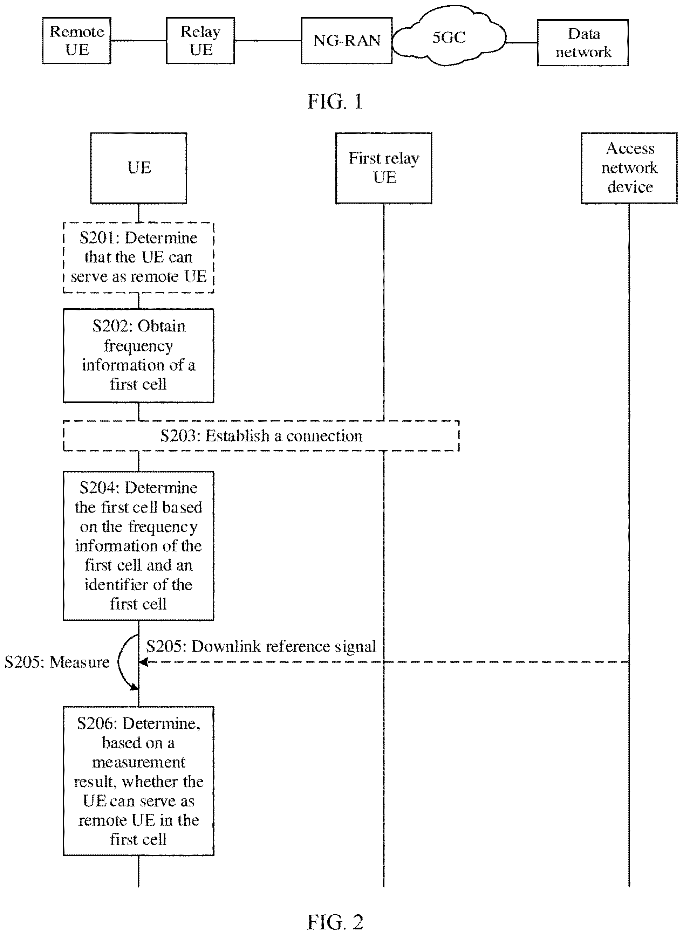

This application relates to a UE to network relay (UE to network relay) mechanism. This mechanism may be used to improve coverage of a cellular network. A topology structure of this mechanism is shown in FIG. 1. FIG. 1 may alternatively be considered as a communication network architecture to which an embodiment of this application is applied. The relay UE is located in a coverage area of a radio access network (radio access network, RAN) node (which may be understood as a cellular network base station) of the cellular network, that is, the relay UE can directly communicate with a RAN through a Uu interface. The remote UE may communicate with the relay UE through a PC5 interface, and send data of the remote UE to the relay UE. Then, the relay UE forwards the data of the remote UE to the RAN and a core network through the Uu interface, and interacts with a data network (data network, DN) through the core network. Alternatively, data that is from the DN and that is to be sent to the remote UE arrives at the core network, the core network sends the data to the RAN, the RAN sends the data to the relay UE through the Uu interface, and then the relay UE forwards the data to the remote UE through the PC5 interface. In FIG. 1, a 5G core (5G core, 5GC) network is used as an example of the core network.

To better describe embodiments of this application, the following describes methods provided in embodiments of this application with reference to the accompanying drawings. In the accompanying drawings corresponding to embodiments of this application, all optional steps are represented by dashed lines. For ease of description, in embodiments of this application, an example in which a terminal device is UE, a remote device is remote UE, and a relay device is relay UE (for example, a first relay device is first relay UE) is used. All the methods provided in embodiments of this application may be applied to the network architecture shown in FIG. 1. For example, the remote UE or the UE in embodiments of this application is remote UE in FIG. 1, an access network device or a second access network device in embodiments of this application is a RAN in FIG. 1, and the relay UE or the first relay UE in embodiments of this application is relay UE in FIG. 1. In addition, in embodiments of this application, an air interface is, for example, a Uu interface.

An embodiment of this application provides a first communication method. FIG. 2 is a flowchart of the method.

S201: UE determines that the UE can serve as remote UE.

For example, the UE may measure a second cell, to obtain a measurement result. The second cell is a current serving cell of the UE, or a cell on which the UE currently camps. In addition, the UE may further read system information of the second cell, and determine, based on a first threshold and an offset that are provided in the system information, whether the UE can serve as the remote UE. For example, if a value of the measurement result is less than a difference between the first threshold and the offset, the UE may serve as the remote UE, and the UE may start to search for relay UE. For example, the UE may perform S202. Alternatively, if a value of the measurement result is greater than or equal to a difference between the first threshold and the offset, the UE may not be the remote UE. In this case, a subsequent step does not need to be performed.

S201 is an optional step. For example, the UE may not need to perform S201, but directly perform S202.

S202: The UE obtains frequency information of a first cell. The first cell is a cell in which the first relay UE is located. The cell in which the first relay UE is located is, for example, a serving cell or a primary cell (primary cell, PCell) of the first relay UE (for example, the first relay UE is in a radio resource control (radio resource control, RRC) connected (connected) state), or a cell on which the first relay UE camps (for example, the first relay UE is in an RRC idle (idle) state or an RRC inactive (inactive) state). When the UE searches for relay UE, information exchange with a plurality of relay UEs may be involved. In this embodiment of this application, interaction between the UE and the first relay UE is used as an example for description.

Optionally, the UE may obtain the frequency information of the first cell in two manners, which are separately described below. Because the UE and the first relay UE are involved below, for ease of differentiation, the UE is temporarily referred to as remote UE in descriptions of the following steps. However, actually, the remote UE has not been connected to a network by using the first relay UE, and only expects to be connected to the network by using the first relay UE.

### 1. First manner

In the first manner, the relay UE sends a message. For example, the message sent by the relay UE is referred to as a first message. The first message may include the frequency information of the first cell. Alternatively, although the first message does not include the frequency information of the first cell, the first message may indicate the frequency information of the first cell. After receiving the first message, the remote UE can determine the frequency information of the first cell. The frequency information of the first cell is, for example, information such as an absolute radio frequency channel number (absolute radio frequency channel number, ARFCN) or a band (band) of the first cell.

For example, the first message is a discovery (discovery) message, or a PC5 RRC message, or may be an RRC message from a serving access network device of the first relay UE. This is equivalent to the following: The serving access network device sends the first message to the remote UE by using the first relay UE. If the first message is a discovery message, the remote UE may receive the first message from the first relay UE after establishing a connection to the first relay UE, or may receive the first message before establishing a connection to the first relay UE. This helps the remote UE obtain the frequency information of the first cell as soon as possible. Optionally, if the first message is a discovery message, the first relay UE may send the first message in a broadcast manner or a unicast manner.

If the first message is a PC5 RRC message, the remote UE may receive the first message from the first relay UE after establishing a connection to the first relay UE, and the first relay UE may send the first message in a broadcast manner or a unicast manner.

If the first message is from the serving access network device of the first relay UE, the remote UE may receive the first message from the first relay UE after establishing a connection to the first relay UE, and both the remote UE and the first relay UE may be in an RRC connected state.

Optionally, the first message may further include an identifier of the first cell. The identifier of the first cell includes, for example, an NCI of the first cell and/or a PCI of the first cell. In other words, the identifier of the first cell and the frequency information of the first cell may be sent by using one message. Alternatively, the first message does not include the identifier of the first cell. For example, the remote UE obtains the identifier of the first cell by using a message other than the first message. For example, the message is a discovery message, a PC5 RRC message, or an RRC message from the serving access network device of the first relay UE. A type of the message and a type of the first message may be the same (for example, both are discovery messages), or may be different (for example, the message is a PC5 RRC message, and the first message is a discovery message).

Optionally, the first message may further include first information. The first information may indicate that the first cell is in an access-barred state or is not in an access-barred state. For example, the first information is cell bar (cell bar) information. If the first cell is in a cell bar state, it indicates that the first cell is in the access-barred state; or if the first cell is not in a cell bar state, it indicates that the first cell is not in the access-barred state. If the first cell is in the access-barred state, in principle, the remote UE should not access the first cell. If the first cell is not in the access-barred state, the remote UE may access the first cell. Based on the first information, the remote UE may determine, as early as possible, whether access to the first cell is allowed, thereby reducing a probability of accessing an inappropriate cell as much as possible.

Alternatively, the first information may not be included in the first message, but is sent to the remote UE by using another message. For example, the message is a discovery message, a PC5 RRC message, or an RRC message from the serving access network device of the first relay UE. A type of the message and a type of the first message may be the same (for example, both are discovery messages), or may be different (for example, the message is a discovery message, and the first message is a PC5 RRC message).

If the first message includes the first information, optionally, the first message may further include second information. The second information may indicate whether searching for an accessible cell at a frequency of the first cell is allowed when the first cell is in the access-barred state, or in other words, the second information may indicate whether searching for an accessible cell at a frequency that is the same as a frequency of the first cell is allowed when the first cell is in the access-barred state. For example, the second information is intra-frequency reselection (intraFreqReselection, IFRI), or may be other information. For example, if the second information indicates that searching for an accessible cell at the frequency of the first cell is allowed when the first cell is in the access-barred state (for example, the second information is the IFRI, and the IFRI indicates allow), and the first information indicates that the first cell is in the access-barred state, the remote UE may continue to search for another cell at the frequency of the first cell, to determine whether the another cell can be accessed. However, if the second information indicates that searching for an accessible cell at the frequency of the first cell is not allowed when the first cell is in the access-barred state (for example, the second information is the IFRI, and the IFRI indicates not allow), and the first information indicates that the first cell is in the access-barred state, the remote UE cannot search for another cell at the frequency of the first cell. In this case, the remote UE may end a process of searching for a cell, or the remote UE may search for a cell at another frequency. For example, all other cells at the frequency of the first cell may have heavy loads, or all other cells at the frequency of the first cell may be in a cell bar state. In this case, the second information may indicate that searching for an accessible cell at the frequency of the first cell is not allowed. In this way, an invalid search process of the remote UE can be reduced, and power consumption of the remote UE can be reduced.

Alternatively, the second information may not be included in the first message, but is sent to the remote UE by using another message. For example, the message is a discovery message, a PC5 RRC message, or an RRC message from the serving access network device of the first relay UE. A type of the message and a type of the first message may be the same (for example, both are discovery messages), or may be different (for example, the message is a discovery message, and the first message is a PC5 RRC message). In addition, the message including the first information and the message including the second information may be a same message, or may be different messages.

### 2. Second manner

In the second manner, the remote UE may first send a message to the relay UE. For example, the message sent by the remote UE is referred to as a second message. After receiving the second message, the relay UE may send a message, for example, referred to as a first message, to the remote UE. The first message may include the frequency information of the first cell. Alternatively, although the first message does not include the frequency information of the first cell, the first message may indicate the frequency information of the first cell. After receiving the first message, the remote UE can determine the frequency information of the first cell. The frequency information of the first cell is, for example, information such as an ARFCN or a band of the first cell.

For example, the second message is a discovery message, a PC5 RRC message, or an RRC message sent to a serving access network device of the first relay UE. A type of the second message and a type of the first message may be the same (for example, both are discovery messages), or may be different (for example, the second message is a discovery message, and the first message is a PC5 RRC message). If the second message is a discovery message, the remote UE may send the second message after establishing a connection to the first relay UE, or may send the second message before establishing a connection to the first relay UE. This helps the remote UE obtain the frequency information of the first cell as soon as possible. Optionally, if the second message is a discovery message, the remote UE may send the second message in a broadcast manner or a unicast manner.

If the second message is a PC5 RRC message, the remote UE may send the second message to the first relay UE after establishing a connection to the first relay UE, and the first relay UE may send the first message in a broadcast manner or a unicast manner.

If the second message is sent to the serving access network device of the first relay UE, the remote UE may send the second message to the first relay UE after establishing a connection to the first relay UE, and both the remote UE and the first relay UE may be in an RRC connected state.

Optionally, the second message includes an identifier of a cell in which or on which the remote UE works or camps. The cell is, for example, referred to as a second cell. An identifier of the second cell includes, for example, an NCI and/or a PCI of the second cell.

In addition, optionally, the second message may include query information. The query information may be used to query (or inquire, or request) an air interface frequency on which the first relay UE works or camps, or the query information is used to query (or inquire, or request) whether the first relay UE works or camps on an air interface frequency (or the query information is used to query whether the first relay UE works in or camps on a cell at an air interface frequency). For example, the air interface frequency is a first frequency. If the query information is used to query the air interface frequency on which the first relay UE works or camps, the query information may not include specific air interface frequency information, but is only used to query the air interface frequency on which the first relay UE works or camps. After receiving the query information, the first relay UE may send the first message to the remote UE, and the first message indicates (or includes) information about a frequency on which the first relay UE works or camps. For example, the first message may include or indicate the frequency information of the first cell, and the first cell is a cell in which or on which the first relay UE works or camps.

Alternatively, if the query information is used to query whether the first relay UE works or camps on the first frequency, the query information may include information about the first frequency. The first frequency corresponding to the information about the first frequency is, for example, an air interface frequency on which relay UE that is expected by the remote UE to serve the remote UE works or camps. The information about the first frequency includes, for example, information about an ARFCN or a band. After the first relay UE receives the query information, if a frequency on which the first relay UE works or camps is the first frequency, for example, the frequency on which the first relay UE works or camps is a frequency corresponding to the ARFCN, or the frequency on which the first relay UE works or camps belongs to the band, the first relay UE may send the first message to the remote UE. In this case, the first message may include or indicate frequency information of the cell in which or on which the first relay UE works or camps. Alternatively, the first message may not include or not indicate frequency information of the cell in which or on which the first relay UE works or camps. For example, the first message may indicate that the first relay UE has camped on the first frequency, or indicate that the first relay UE has camped on a cell at the first frequency. For example, the first message can perform indication by using one bit (bit). In this way, overheads of the first message can be reduced. Alternatively, it is possible that the frequency on which the first relay UE works or camps is not the first frequency. In this case, the first relay UE may not send a message to the remote UE (for example, may not send the first message), or the first relay UE may send a message to the remote UE, where the message includes or indicates the frequency information of the cell in which or on which the first relay UE works or camps, or indicates that the first relay UE does not camp on the first frequency.

Alternatively, the information about the first frequency may not include the information about the ARFCN or the band, but include other information. For example, the remote UE expects to search for relay UE camping on a high frequency on an air interface, to improve a data rate of the remote UE. In this case, the information that is about the first frequency and that is included in the query information may alternatively be a frequency threshold. An air interface frequency higher than the frequency threshold is considered as an air interface frequency that meets a condition. After the first relay UE receives the query information, if the frequency on which the first relay UE works or camps is the first frequency, for example, the frequency on which the first relay UE works or camps is higher than the frequency threshold, the first relay UE may send the first message to the remote UE. In this case, the first message may include or indicate frequency information of the cell in which or on which the first relay UE works or camps. Alternatively, the first message may not include or not indicate frequency information of the cell in which or on which the first relay UE works or camps. For example, the first message may indicate that the first relay UE has camped on the first frequency, or indicate that the first relay UE has camped on a cell at the first frequency. For example, the first message can perform indication by using one bit. In this way, overheads of the first message can be reduced. Alternatively, it is possible that the frequency on which the first relay UE works or camps is not the first frequency. In this case, the first relay UE may not send a message to the remote UE (for example, may not send the first message), or the first relay UE may send a message to the remote UE, where the message includes or indicates the frequency information of the cell in or on which the first relay UE works or camps, or indicates that the first relay UE does not camp on the first frequency.

Optionally, if the first relay UE is UE of release (release) 17, the second message includes the NCI of the second cell, and the first relay UE determines that the NCI of the second cell is the same as the NCI of the first cell, the first relay UE may determine content of the first message in the foregoing manner, or determine whether to send the first message. However, if the first relay UE determines that the NCI of the second cell is different from the NCI of the second cell, the first relay UE may not send a message (for example, not send the first message) to the remote UE. Different NCIs may indicate that an access network device corresponding to the first cell is different from an access network device corresponding to the second cell. However, the release 17 requires that only in a co-site case can one UE switch from a direct-connectivity path between the UE and an access network device to an indirect-connectivity path through which the access network device is accessed by using relay UE. Therefore, if the NCI of the second cell is different from the NCI of the second cell, it indicates that the remote UE and the first relay UE are located in different access network devices, and the remote UE cannot perform access by using the first relay UE. Therefore, in this case, the first relay UE may not need to reply to the remote UE with a message.

For an implementation of the first message, for example, information such as the type of the first message or the content (for example, one or more of the identifier of the first cell, the first information, or the second information may be included) included in the first message, refer to the foregoing descriptions.

The remote UE can obtain the frequency information of the first cell in either of the foregoing two manners. Alternatively, in addition to the foregoing manners, the remote UE may obtain the frequency information of the first cell in another manner. This is not limited in this embodiment of this application.

S203: The remote UE establishes a connection to the first relay UE. The remote UE may establish a sidelink connection to the first relay UE.

The remote UE may perform an interaction process similar to that in S202 with a plurality of relay UEs. In S203, the remote UE may establish connections to some or all of the plurality of relay UEs. In this embodiment of this application, an example in which the remote UE establishes a connection to the first relay UE is used.

If the remote UE obtains the first information, and if the first information indicates that the first cell is not in an access-barred state, S203 and a subsequent step may be performed. Alternatively, if the first information indicates that the first cell is in an access-barred state, the remote UE does not need to perform S203 and a subsequent step. For example, the remote UE may re-search for a cell and reselect relay UE. If the remote UE needs to re-search for a cell, and the remote UE has obtained the second information, and if the second information indicates that searching for an accessible cell at the frequency of the first cell is allowed when the first cell is in the access-barred state, the remote UE may continue to search for a cell at the frequency of the first cell. However, if the second information indicates that searching for an accessible cell at the frequency of the first cell is not allowed when the first cell is in the access-barred state, the remote UE may not search for a cell at the frequency of the first cell. For example, the remote UE may search for a cell at a frequency other than the frequency, or the remote UE may stop the search process, and end the process. If the remote UE searches for a cell at a frequency other than the frequency, and if the remote UE determines specific relay UE in the search process, the remote UE needs to determine whether a frequency of a cell in which or on which the relay UE works or camps is the frequency of the first cell. If the frequency of the cell in which or on which the relay UE works or camps is the frequency of the first cell, the remote UE needs to give up the relay UE.

S203 is an optional step, and the remote UE may not establish a connection to the first relay UE. In addition, S203 may occur after S202, or may occur before S202.

Optionally, the remote UE may further obtain the PCI of the first cell. For example, after establishing a connection to the remote UE, the first relay UE may send the PCI of the first cell to the remote UE. Alternatively, after establishing a connection to the first relay UE, the remote UE may expect to establish a connection to an access network device corresponding to the first cell. In this case, the remote UE may send an RRC establishment request message to the access network device. After receiving the RRC establishment request message, the access network device may send an RRC establishment response message to the remote UE. The RRC establishment response message may include the PCI of the first cell.

As described above, the first message may include the identifier of the first cell, and the identifier of the first cell may include the PCI of the first cell. This solution does not conflict with the solution in which the remote UE obtains the PCI of the first cell herein. For example, the remote UE may receive the PCI of the first cell for a plurality of times. Alternatively, the identifier that is of the first cell and that is included in the foregoing first message may be the NCI of the first cell. In this case, the remote UE herein may further obtain the PCI of the first cell.

S204: The remote UE determines the first cell based on the frequency information of the first cell and the identifier of the first cell. That the remote UE determines the first cell based on the frequency information of the first cell and the identifier of the first cell may alternatively be understood as the following: The remote UE finds the first cell through searching, or the remote UE finds the first cell.

For example, the identifier of the first cell is the PCI of the first cell. In this case, the remote UE performs searching at a frequency corresponding to the frequency information of the first cell, for example, finds one or more cells through searching. The remote UE may uniquely determine a cell from the one or more cells based on the PCI of the first cell. Optionally, after determining the cell, the remote UE may further read system information such as a SIB 1 in the cell, and determine an NCI of the cell based on the SIB 1. The remote UE may compare the NCI of the cell with the NCI of the first cell. If the two are consistent, the remote UE may determine that the cell is the first cell.

Alternatively, the identifier of the first cell is the NCI of the first cell. In this case, the remote UE performs searching at a frequency corresponding to the frequency information of the first cell, for example, finds one or more cells through searching. The remote UE may read system information such as a SIB 1 in each cell that is found through searching, determine an NCI of each cell based on the SIB 1, and compare the read NCI with the NCI of the first cell. If an NCI of a specific cell is consistent with the NCI of the first cell, the remote UE may determine that the cell is the first cell.

It can be learned that the remote UE can obtain the frequency information of the first cell in which the first relay UE is located, and can further determine the first cell based on the frequency information and the identifier of the first cell. In this way, there is no need to perform blind search on a plurality of frequencies. This reduces a process of blindly searching for frequencies, and reduces time required for searching for a cell. In addition, because the process of blindly searching for frequencies is reduced, power consumption of the remote UE is also reduced.

S205: The remote UE measures the first cell.

For example, the remote UE receives a downlink reference signal in the first cell, and the downlink reference signal is, for example, a synchronization signal and physical broadcast channel block (synchronization signal and physical broadcast channel block, SSB) or a channel state information-reference signal (channel state information-reference signal, CSI-RS). That the remote UE measures the downlink reference signal may be considered as measuring the first cell.

S206: The remote UE determines, based on a measurement result, whether the remote UE can serve as remote UE in the first cell. Alternatively, the remote UE determines, based on the measurement result, whether the remote UE can access the first cell by using the relay UE. Alternatively, the remote UE determines, based on the measurement result, whether the remote UE can serve as remote UE.

For example, the remote UE determines, based on whether a threshold condition is met, whether a discovery message can be received or sent on a sidelink, to evaluate a status of an access stratum (ASstratum ). For example, if a value of the measurement result of the first cell (a serving cell, a primary cell, or a camping cell) is less than a value obtained by subtracting an offset from a threshold A (for example, threshHighRemote), it is determined that the remote UE meets the threshold condition, and the remote UE can serve as remote UE in the first cell. Alternatively, if a value of the measurement result of the first cell (a serving cell, a primary cell, or a camping cell) is greater than a threshold A, it is considered that the remote UE does not meet the threshold condition, and the remote UE does not meet the condition for serving as remote UE in the first cell. The offset is, for example, hystMaxRemote.

If the remote UE can serve as remote UE in the first cell, the remote UE may be connected to the first cell by using the first relay UE. However, if the value of the measurement result is greater than the threshold A, the remote UE has good signal quality when directly accessing the first cell. Therefore, the remote UE may access the first cell in a manner of directly connecting to the access network device.

Optionally, S206 may occur after the remote UE triggers relay reselection because the remote UE considers that a signal on the sidelink is poor. For example, if the remote UE finds that sidelink quality (for example, RSRP) is less than a threshold B, the remote UE is triggered to perform relay reselection. After the remote UE reselects the first relay UE, the remote UE is triggered to measure and determine a serving cell or a camping cell of the reselected first relay UE. Optionally, when sidelink quality (for example, the RSRP) of the remote UE and the first relay UE is greater than a specific threshold, the remote UE may not measure or determine a serving cell or a camping cell of the first relay UE, thereby reducing power consumption.

Alternatively, optionally, S206 may occur after the remote UE finds that signal quality (for example, RSRP) on the sidelink is worse than a threshold C. For example, the remote UE finds that the sidelink quality (for example, the RSRP) is less than a specific threshold C. In this case, relay reselection may not be triggered, and the remote UE may still measure and determine a serving cell or a camping cell of the currently connected first relay UE. Optionally, when sidelink quality (for example, the RSRP) of the remote UE and the first relay UE is greater than a specific threshold, the remote UE may not measure or determine a serving cell or a camping cell of the relay UE, thereby reducing power consumption.

In this embodiment of this application, the UE can obtain the frequency information of the cell in which the relay UE is located, and can further determine the cell based on the frequency information and the identifier of the cell. In this way, there is no need to perform blind search on a plurality of frequencies. This reduces a process of blindly searching for frequencies, and reduces time required for searching for a cell. In addition, because the process of blindly searching for frequencies is reduced, power consumption of the UE is also reduced. In addition, the UE can further obtain the first information, or obtain the first information and the second information, so that an invalid search process of the UE can be reduced, and power consumption can be further reduced.

Currently, when the remote UE is served in an RRC connected state, the remote UE may move or a link blockage may occur. Consequently, quality of a connection between the remote UE and the access network device deteriorates, and quality of service cannot be ensured. In this case, the access network device may switch the remote UE from a direct link between the remote UE and the access network device to an indirect link through which the remote UE is connected to the access network device by using the relay UE. The switching process is also referred to as path switch (path switch). For example, when connection quality of a Uu interface between the remote UE and the access network device deteriorates, the access network device may configure a measuring object for the remote UE. The measuring object may include a Uu interface measuring object and an SL measuring object. The Uu interface measuring object includes, for example, Uu interface frequencies, and the remote UE may measure these frequencies on the Uu interface. The SL measuring object includes, for example, SL frequencies, and the remote UE may measure relay UEs that work on these frequencies on the sidelink. After completing measurement, the remote UE may send a measurement result to the access network device. The measurement result may include a Uu interface measurement result and an SL measurement result. The access network device may determine, based on the measurement result, whether the remote UE performs a cell handover or switches from the direct link to the indirect link.

When sending the SL measurement result to the access network device, the remote UE may further send an ID of a serving cell (serving cell) of the measured relay UE, and the access network device can determine the serving cell based on the ID of the serving cell. However, if the serving cell is not a cell provided by the access network device, the access network device cannot learn a frequency of the serving cell. Generally, a serving cell of the relay UE is an FR2 highfrequency cell (namely, a cell with a frequency greater than 6 GHz), for example, a frequency of the serving cell is 28 GHz or the serving cell is a cell working on a band n257. In this case, after the remote UE hands over to the relay UE, because a bandwidth of the serving cell in which the relay UE is located is large (usually 400 MHz), the relay UE can obtain a higher data rate. Therefore, remote UE with a large service volume usually expects to be connected to relay UE that is located in a serving cell whose frequency is high. For example, the access network device determines, based on the measurement result, that the remote UE switches to the indirect link. In this case, the access network device may determine one relay UE. However, because frequencies of serving cells of some relay UEs are unknown to the access network device, the access network device may randomly select only one relay UE from the relay UEs, and it is very likely that a frequency of a serving cell of the selected relay UE is a low frequency. It can be learned that in a current solution, the relay UE selected by the access network device cannot ensure a data rate of the remote UE.

In another case, when the remote UE is served in the RRC connected state, because a service requirement of the remote UE is large, for example, a user needs to watch a high-definition video, direct connectivity performed based on only an air interface or transmission performed by using only one relay UE is insufficient to support the user in enjoying good quality of service. Therefore, the remote UE also needs to find one relay UE that can provide a large data rate.

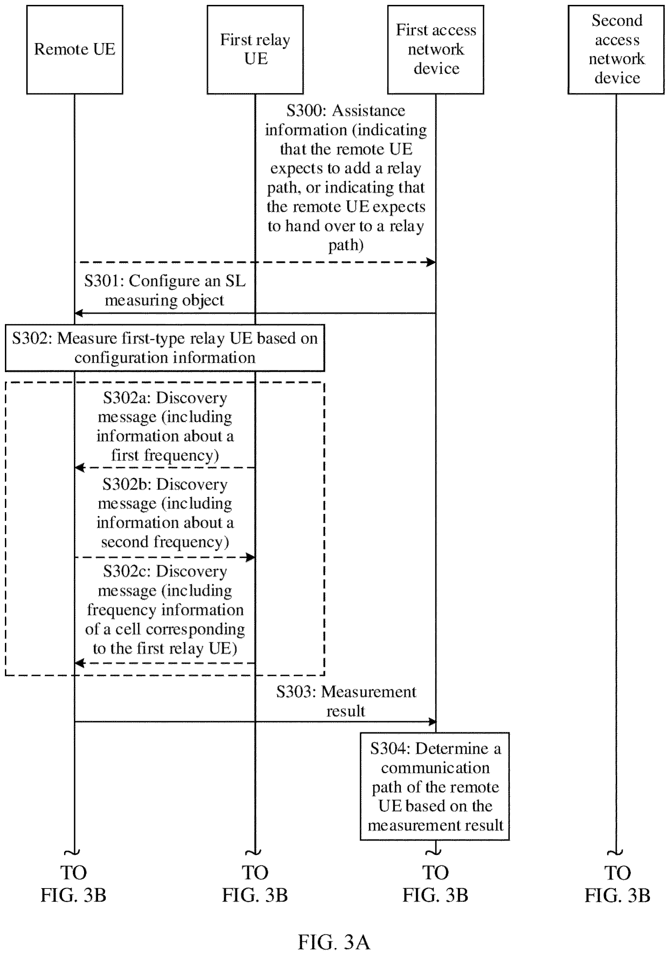

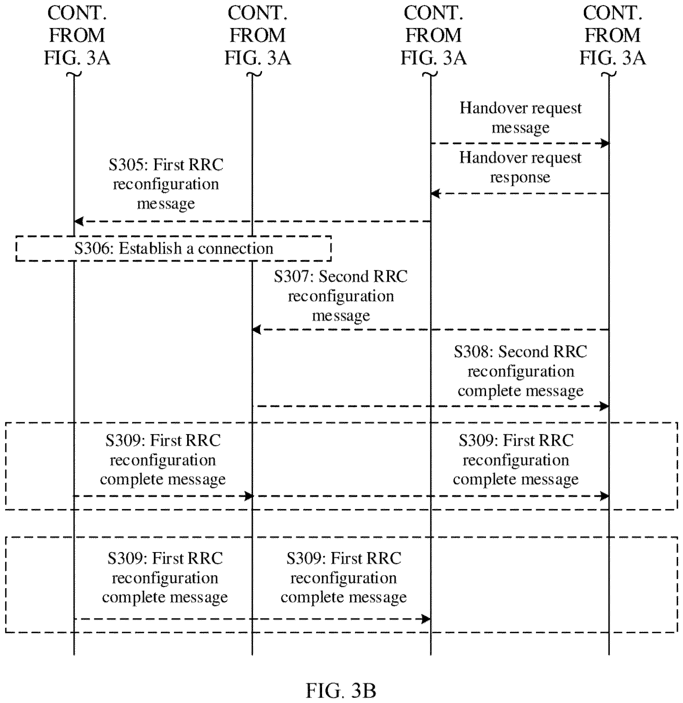

In view of this, an embodiment of this application provides a second communication method. In the method, an access network device may configure, for remote UE, cell information or air interface frequency information that relay UE needs to meet. In this way, the access network device can determine the cell information or the air interface frequency information of the relay UE measured by the remote UE. In this way, when selecting relay UE for the remote UE, the access network device can select, as much as possible, relay UE that meets a condition. For example, relay UE that is located in a cell whose frequency is high is selected, to improve a data rate of the remote UE. FIG. 3A and FIG. 3B are a flowchart of the method.

S300: Remote UE sends assistance information to a first access network device. Correspondingly, the first access network device receives the assistance information from the remote UE. The assistance information may indicate that the remote UE expects to add a relay path. For example, if the remote UE expects to improve a data rate or reliability, the remote UE may expect to add the relay path. Alternatively, the assistance information may indicate that the remote UE expects to switch to a relay path. For example, if the remote UE expects to reduce power consumption, the remote UE may expect to switch to the relay path.

S300 is an optional step. S300 may occur before the remote UE finds the first relay UE, or may occur after the remote UE has found the first relay UE.

S301: The first access network device sends configuration information to the remote UE. Correspondingly, the remote UE receives the configuration information from the first access network device. The first access network device is, for example, a serving access network device of the remote UE (for example, the remote UE is in an RRC connected state), or an access network device on which the remote UE camps (for example, the remote UE is in an RRC idle state or an RRC inactive state). The first access network device may send the configuration information to the remote UE directly or by using another relay device. Correspondingly, the remote UE may receive the configuration information from the first access network device directly or by using the another relay device. In this embodiment of this application, the remote UE may change a communication path. Therefore, the first access network device may also be referred to as a source access network device.

The configuration information may be used to configure an SL measuring object (measuring object, MO). The SL measuring object includes, for example, a measurement frequency on an SL. One SL measuring object may be considered as one SL measurement frequency, and the configuration information may be used to configure one or more SL measuring objects. The measurement frequency on the SL means that the remote UE may measure relay UE that is on the sidelink and that works on the measurement frequency. Optionally, the configuration information may be further used to configure cell information or Uu interface frequency information (or referred to as air interface frequency information). The cell information is, for example, a cell in which or on which relay UE working on the SL measuring object needs to work or camp, and the air interface frequency information is, for example, a frequency of the cell in which or on which the relay UE working on the SL measuring object needs to work or camp. If one UE is in an RRC connected state, it is considered that the UE works in a cell in which the UE is currently located, namely, a serving cell of the UE. If one UE is in an RRC idle state or an RRC inactive state, it is considered that the UE camps on a cell in which the UE is currently located. Optionally, the cell information includes, for example, an identifier of a cell. The identifier of the cell includes, for example, a PCI and/or an NCI of the cell, or may further include another identifier of the cell. The air interface frequency information includes, for example, information about an ARFCN or a band.

The remote UE may select, based on the configuration information, relay UE that needs to be measured. For example, an SL measuring object and cell information are configured based on the configuration information. In this case, the relay UE that needs to be measured by the remote UE includes relay UE that is on the sidelink and that works on the SL measuring object and has camped (or has worked) on or can camp (or can work) on a cell corresponding to the cell information. For example, the SL measuring object configured based on the configuration information includes a frequency f1, and the cell information configured based on the configuration information includes a cell c1. In this case, the remote UE may measure relay UE that is on the sidelink and that works on the frequency f1 and has camped (or has worked) on a Uu interface or can camp (or can work) on the cell c1. For another example, the SL measuring object and the air interface frequency information are configured based on the configuration information. In this case, the relay UE that needs to be measured by the remote UE includes relay UE that is on the sidelink and that works on the SL measuring object and has camped (or has worked) on or can camp (or can work) on a cell at a frequency corresponding to the air interface frequency information. For example, the SL measuring object configured based on the configuration information includes the frequency f1, and the air interface frequency information configured based on the configuration information includes a frequency f2. In this case, the remote UE may measure relay UE that is on the sidelink and that works on the frequency f1 and has camped (or has worked) on the Uu interface or can camp (or can work) on a cell at the frequency f2.

In addition, optionally, the configuration information may further be used to configure an air interface measuring object (or referred to as a Uu interface measuring object). The air interface measuring object includes, for example, air interface frequency information, or includes air interface frequency information and cell information. For differentiation, the cell information included in the SL measuring object configured based on the configuration information may alternatively be referred to as first cell information, the air interface frequency information included in the SL measuring object may be referred to as first air interface frequency information, the cell information included in the air interface measuring object configured based on the configuration information may be referred to as second cell information, and the air interface frequency information included in the air interface measuring object may be referred to as second air interface frequency information. It should be noted that the first cell information and the first air interface frequency information are not used for measurement performed by the remote UE, that is, the remote UE does not need to measure the first cell information or the first air interface frequency information on an air interface. Both the first cell information and the first air interface frequency information are used by the remote UE to select relay UE that needs to be measured, or are used by the remote UE to select relay UE that needs to send a measurement report to the first access network device. However, the second cell information and the second air interface frequency information are used by the remote UE to perform measurement, that is, the remote UE may measure, on an air interface, a cell corresponding to the second cell information, or measure a cell at a frequency corresponding to the second air interface frequency information.

The first access network device may determine a communication path of the remote UE based on the configuration information. For example, the communication path determined by the first access network device for the remote UE may be a single-connectivity path. The single-connectivity path is, for example, a direct-connectivity path between the remote UE and the access network device. The access network device is, for example, the first access network device, or may be another access network device. In this case, the remote UE may need to perform a cell handover, or may not need to perform a cell handover. Alternatively, the single-connectivity path is, for example, a path through which the remote UE is connected to a network by using the relay UE. The remote UE is connected, by using the relay UE, to an access network device in which the relay UE is located. The access network device is, for example, the first access network device, or may be another access network device. Alternatively, the communication path determined by the first access network device for the remote UE may be a dual-connectivity or multi-connectivity path. The dual-connectivity path is used as an example. The dual-connectivity path includes, for example, two paths through which the remote UE is separately connected to two cells on an air interface, where the two cells may correspond to a same access network device, or may correspond to different access network devices. Alternatively, the dual-connectivity path includes, for example, a path through which the remote UE is connected to a cell on an air interface, and further includes a path through which the remote UE is connected to a network by using relay UE, where the cell and a cell in which the relay UE is located may be a same cell, or may be different cells. If the two cells are different cells, the two cells may correspond to a same access network device, or may correspond to different access network devices. Alternatively, the dual-connectivity path includes, for example, paths through which the remote UE is separately connected to a network by using two relay UEs, where cells in which the two relay UEs are located may be a same cell, or may be different cells. If the two cells are different cells, the two cells may correspond to a same access network device, or may correspond to different access network devices.

The first access network device may determine the communication path of the remote UE based on the configuration information in a corresponding manner. The following provides descriptions based on S302 to S304.

S302: The remote UE measures first-type relay UE based on the configuration information. Alternatively, S302 may be replaced with the following: The remote UE determines first-type relay UE based on the configuration information, and measures the first-type relay UE.

The first-type relay UE is determined based on the configuration information. For example, an SL measuring object and first cell information are configured based on the configuration information. In this case, the first-type relay UE may include relay UE that works on the SL measuring object and that has camped (or has worked) on or can camp (or can work) on a cell corresponding to the first cell information. For example, the SL measuring object configured based on the configuration information includes a frequency f1, and the first cell information configured based on the configuration information includes a cell c1. In this case, the first-type relay UE may include relay UE that is on the sidelink and that works on the frequency f1 and has camped (or has worked) on a Uu interface or can camp (or can work) on the cell c1. One relay UE is not the first-type relay UE if the relay UE meets one or more of the following conditions: A sidelink working frequency of the relay UE is not an SL measuring object, the relay UE does not work on the Uu interface and does not camp on the cell corresponding to the first cell information, or the relay UE cannot work on the Uu interface and cannot camp on the cell corresponding to the first cell information.

Alternatively, an SL measuring object and first air interface frequency information are configured based on the configuration information. In this case, the first-type relay UE may include relay UE that works on the SL measuring object and that has camped (or has worked) on or can camp (or can work) on a cell at a frequency corresponding to the first air interface frequency information. For example, the SL measuring object configured based on the configuration information includes the frequency f1, and the air interface frequency information configured based on the configuration information includes a frequency f2. In this case, the first-type relay UE may include relay UE that is on the sidelink and that works on the frequency f1 and has camped (or has worked) on the Uu interface or can camp (or can work) on a cell at the frequency f2. One relay UE is not the first-type relay UE if the relay UE meets one or more of the following conditions: A sidelink working frequency of the relay UE is not an SL measuring object, the relay UE does not work on the Uu interface and does not camp on the cell at the frequency corresponding to the first air interface frequency information, or the relay UE cannot work on the Uu interface and cannot camp on the cell at the frequency corresponding to the first air interface frequency information.

After determining the first-type relay UE, the remote UE may measure the first-type relay UE. It should be noted that the remote UE may measure only the first-type relay UE, and does not measure another relay UE. Alternatively, in addition to measuring the first-type relay UE, the remote UE may further measure another relay UE. This embodiment of this application mainly describes a process in which the remote UE measures the first-type relay UE. If the remote UE further needs to measure another relay UE, a measurement process is similar.

To measure the relay UE, the remote UE needs to receive a message from the relay UE, to complete measurement based on the received message. Optionally, the measurement process of the remote UE may be implemented in different manners, which are separately described below. In the following description process, a process in which the remote UE measures one relay UE (for example, referred to as first relay UE) is used as an example.

### 1. First manner

In the first manner, the first relay UE may send a message. For example, the message sent by the first relay UE is referred to as a fourth message. For this, refer to S302a. Optionally, the fourth message may include information about a first frequency. The first frequency is, for example, a frequency of a cell in which the first relay UE is located, or a frequency of a cell in which or on which the first relay UE can work or camp. The "first frequency" herein may alternatively be referred to as a "third frequency". Optionally, the information about the first frequency includes, for example, information about an ARFCN, a band, or the like. In addition, optionally, the fourth message may further include an identifier of the first relay UE, for example, include an NCI and/or a PCI of the first relay UE.

In embodiments of this application, if one UE is in an RRC connected state, a cell in which the UE is located is, for example, a serving cell of the UE, or a cell in which the UE works. Alternatively, if one UE is in an RRC inactive state or an RRC idle state, a cell in which the UE is located is, for example, a cell on which the UE camps. That is, a "working cell" or a "serving cell" corresponds to UE in an RRC connected state, and a "camping cell" corresponds to UE in an RRC inactive state or an RRC idle state.

The fourth message is, for example, a discovery (discovery) message, or may be a PC5 RRC message. For descriptions of these messages, refer to the embodiment shown in FIG. 2. In S302a, an example in which the fourth message is a discovery message and includes the information about the first frequency is used.

If the remote UE measures only the first-type relay UE, and does not measure relay UE of another category, the remote UE may determine, based on the configuration information, whether the first relay UE is the first-type relay UE. For example, if the first air interface frequency information is configured based on the configuration information, and the first frequency belongs to the frequency corresponding to the first air interface frequency information, the first relay UE is the first-type relay UE, and the remote UE may measure the first relay UE. However, if the first frequency does not belong to the frequency corresponding to the first air interface frequency information, the first relay UE is not the first-type relay UE, and the remote UE may not measure the first relay UE. For another example, if the first cell information is configured based on the configuration information, and a frequency of the first cell belongs to the first frequency (for example, the frequency of the first cell is the first frequency, or the frequency of the first cell is included in the first frequency (for example, the first frequency is a band)), the first relay UE is the first-type relay UE, and the remote UE may measure the first relay UE. However, if a frequency of the first cell belongs to the first frequency, the first relay UE is not the first-type relay UE, and the remote UE may not measure the first relay UE. If the remote UE needs to measure the first relay UE, optionally, the remote UE may complete measurement for the first relay UE by measuring the fourth message. For example, the remote UE may measure reference signal received power (reference signal received power, RSRP), reference signal received quality (reference signal received quality, RSRQ), or the like of the fourth message.

Alternatively, if the remote UE may measure relay UE of another category in addition to measuring the first-type relay UE, the remote UE may measure the first relay UE regardless of whether the first frequency belongs to or does not belong to the frequency corresponding to the first air interface frequency information, or regardless of whether the frequency of the first cell belongs to or does not belong to the first frequency.

### 2. Second manner

In the second manner, the remote UE may first send a message to the first relay UE. For example, the message sent by the remote UE is referred to as a fifth message. After receiving the fifth message, the first relay UE may send a message, for example, referred to as a sixth message, to the remote UE. The remote UE may perform measurement based on the sixth message. For this, refer to S302b and S302c.

The fifth message may be used to query (or inquire, or request) frequency information of the cell in which the first relay UE is located, or used to query (or inquire, or request) frequency information of a cell in which or on which the first relay UE can work or camp, or used to query (or inquire, or request) whether the first relay UE has camped on or can camp on the cell at the second frequency. If the fifth message is used to query whether the first relay UE has camped on or can camp on the cell at the second frequency, it is considered that the first relay UE meets a condition queried in the fifth message in all the following cases: The first relay UE has camped on the cell at the second frequency; or the first relay UE can camp on the cell at the second frequency although the first relay UE has not camped on the cell at the second frequency currently; or the first relay UE has worked on the cell at the second frequency; or the first relay UE can work on the cell at the second frequency although the first relay UE has not worked on the cell at the second frequency currently. The second frequency is, for example, a frequency corresponding to the first air interface frequency information. If a plurality of frequencies are configured based on the first air interface frequency information, the second frequency may include all or some of the plurality of frequencies. For example, the "second frequency" herein may alternatively be referred to as a "third frequency".

If the fifth message is used to query whether the first relay UE can work or can camp on a cell at a specific frequency, it indicates that a capability of the first relay UE is queried. Even if the first relay UE does not currently work or camp on the cell at the frequency, provided that the first relay UE has a capability of working or camping on the cell at the frequency, it is considered that the condition queried in the fifth message is met. Alternatively, if the first relay UE currently works in or camps on the cell at the frequency, it is also considered that the condition queried in the fifth message is met. However, if the fifth message is used query whether the first relay UE works in or camps on a cell at a specific frequency, it indicates that a cell in which the first relay UE is currently located is queried. If the first relay UE currently works in or camps on the cell at the frequency, it is considered that the condition queried in the fifth message is met. However, if the first relay UE does not currently work or camp on the cell at the frequency, even if the first relay UE has a capability of working or camping on the cell at the frequency, it is considered that the condition queried in the fifth message is not met.

If the fifth message is used to query the frequency information of the cell in which the first relay UE is located, or is used to query the frequency information of the cell in which or on which the first relay UE can work or camp, the fifth message may not include specific frequency information, and the remote UE may wait for a reply from the first relay UE. In this way, transmission overheads of the fifth message can be reduced.

Alternatively, if the fifth message is used to query whether the first relay UE has camped on or can camp on the cell at the second frequency, the fifth message may include information about the second frequency. The information about the second frequency is, for example, information about an ARFCN, a band, or the like.

For the first relay UE, if the fifth message is used to query the frequency information of the cell in which the first relay UE is located, the sixth message may include frequency information of a cell in which or on which the first relay UE currently works or camps.

Alternatively, if the fifth message is used to query the frequency information of the cell in which or on which the first relay UE can work or can camp, the sixth message may include the frequency information of the cell in which or on which the first relay UE can work or can camp.

Alternatively, if the fifth message is used to query whether the first relay UE has camped on or can camp on the cell at the second frequency, the first relay UE may meet the condition queried in the fifth message, or may not meet the condition queried in the fifth message. If the first relay UE has camped on, has worked, can camp on, or can work on the cell at the second frequency, the first relay UE meets the condition queried in the fifth message. In this case, the sixth message may include information about the second frequency. Alternatively, the sixth message may indicate that the first relay UE has currently camped on or can camp on the cell at the second frequency. For example, indicated is performed in the sixth message by using one bit (bit). If a value of the bit is "1", it indicates that the first relay UE has currently camped on or can camp on the cell at the second frequency. However, if the first relay UE currently does not camp on, does not work in, cannot camp on, or cannot work in the cell at the second frequency, the first relay UE does not meet the condition queried in the fifth message. In this case, the first relay UE may still send the sixth message to the remote UE. The sixth message includes, for example, a frequency of a cell on which the first relay UE camps or can camp, or the sixth message may indicate that the first relay UE does not camp on and cannot camp on the cell at the second frequency. For example, indication is performed in the sixth message by using one bit. If a value of the bit is "0", it indicates that the first relay UE does not camp on and cannot camp on the cell at the second frequency. Alternatively, if the first relay UE currently does not camp on, does not work in, cannot camp on, or cannot work in the cell at the second frequency, the first relay UE does not meet the condition queried in the fifth message. In this case, the first relay UE may alternatively not send the sixth message to the remote UE, and accordingly, the remote UE does not need to measure the first relay UE. In this manner, signaling overheads can be reduced, and power consumption of the remote UE can also be reduced.

If the sixth message includes the frequency information of the cell in which or on which the first relay UE currently works or camps, or the sixth message includes the frequency information of the cell in which or on which the first relay UE can work or camp, a frequency corresponding to the frequency information included in the sixth message may belong to the frequency corresponding to the first air interface frequency information. In this case, the first relay UE is the first-type relay UE. Alternatively, a frequency corresponding to the frequency information included in the sixth message may not belong to the frequency corresponding to the first air interface frequency information. In this case, the first relay UE is not the first-type relay UE. The remote UE may measure only the first-type relay UE. If the first relay UE is the first-type relay UE, the remote UE may measure the first relay UE. However, if the first relay UE is not the first-type relay UE, the remote UE may not measure the first relay UE. Alternatively, in addition to measuring the first-type relay UE, the remote UE may further measure another relay UE. In this case, regardless of whether the first relay UE is the first-type relay UE, the remote UE may measure the first relay UE.

In S302b, an example in which the fifth message is a discovery message and includes the information about the second frequency is used. In S302c, an example in which the sixth message is a discovery message and includes the frequency information of the cell corresponding to the first relay UE is used. The cell corresponding to the first relay UE is, for example, the cell in which or on which the first relay UE currently works or camps, or the cell in which or on which the first relay UE can work or camp.

S303: The remote UE sends a measurement result to the first access network device. Correspondingly, the first access network device receives the measurement result from the remote UE. The measurement result is, for example, a measurement report. Alternatively, it is understood as the following: The measurement result is included in a measurement report. The measurement result may be used to determine the communication path of the remote UE. For example, the first access network device may determine the communication path of the remote UE based on the measurement result.

If the remote UE measures only the first-type relay UE, and does not measure relay UE of another type, the measurement result may include a measurement result of the first-type relay UE, and does not include a measurement result of another relay UE. Alternatively, if the remote UE measures another relay UE in addition to the first-type relay UE, the measurement result still includes only a measurement result of the first-type relay UE, and does not include a measurement result of the another relay UE. In other words, even if the remote UE measures a plurality of types of relay UEs, when sending the measurement result to the first access network device, the remote UE may send only the measurement result of the first-type relay UE, so that the measurement result reported by the remote UE meets a requirement of the first access network device, thereby reducing transmission overheads.

Optionally, in addition to sending the measurement result to the first access network device, the remote UE may further send, to the first access network device, one or more pieces of information corresponding to the measurement result, such as an identifier of relay UE, an identifier of a cell in which the relay UE is located, or a frequency of the relay UE on a Uu interface (for example, a frequency of the cell in which the relay UE is located).

Optionally, if the remote UE further measures the air interface measuring object, the measurement result may further include an air interface measurement result, for example, include a cell measurement result.

For example, the remote UE may send an RRC message to the first access network device. The measurement result may be included in the RRC message. The one or more pieces of information such as the identifier of the relay UE, the identifier of the cell in which the relay UE is located, or the frequency of the relay UE on the Uu interface may also be included in the RRC message.

S304: The first access network device determines the communication path of the remote UE based on the measurement result.

For example, the first access network device may determine, based on the measurement result, that the communication path of the remote UE is to switch to connecting to a network by using specific relay UE, or is to hand over to another cell. In other words, the communication path determined by the first access network device for the remote UE is a single-connectivity path. For example, if the measurement result indicates that the air interface measurement result is good, the first access network device may determine that the communication path of the remote UE is to switch to connecting to the network by using specific relay UE. Alternatively, if the measurement result indicates that an SL measurement result is good, the first access network device may determine that the communication path of the remote UE is to switch to connecting to the network by using specific relay UE. The relay UE is, for example, determined by the first access network device based on the measurement result. For example, the relay UE is relay UE with a good measurement result.

Optionally, regardless of whether the determined communication path of the remote UE is to hand over to another cell or is to switch to connecting to the network by using specific relay UE, the first access network device may send a handover request message to the second access network device. The handover request message is, for example, a handover request (handover request). If the communication path of the remote UE is to hand over to another cell, the second access network device is an access network device corresponding to the cell, the cell is, for example, the second cell, and the handover request message may be used to query (or inquire, or request) whether to accept that the remote UE accesses the second cell served by the second access network device. However, if the communication path of the remote UE is to switch to connecting to the network by using specific relay UE, for example, the relay UE is the first relay UE, the second access network device is an access network device corresponding to a cell in which or on which the relay UE works or camps, and the handover request message may be used to query (or inquire, or request) whether to accept that the remote UE is connected to the network by using the first relay UE served by the second access network device. Optionally, the handover request message may further include information about a frequency to which the remote UE is expected to switch and/or expected quality of service (quality of service, QoS). The frequency to which the remote UE is expected to switch is, for example, a frequency of the second cell, or a frequency of the cell in which the first relay UE is located.

After receiving the handover request message, the second access network device may send a handover request response to the first access network device. The handover request response is, for example, an HO response. If the handover request message is used to query whether to accept that the remote UE accesses the second cell served by the second access network device, and if the second access network device can accept that the remote UE accesses the second cell served by the second access network device, the HO response is, for example, an HO acknowledgment (ACK), to indicate that the second access network device accepts that the remote UE accesses the second cell served by the second access network device. However, if the second access network device cannot accept that the remote UE accesses the second cell served by the second access network device, the HO response is, for example, an HO negative acknowledgment (NACK), to indicate that the second access network device does not accept that the remote UE accesses the second cell served by the second access network device. Alternatively, if the handover request message is used to query whether to accept that the remote UE is connected to the network by using the first relay UE served by the second access network device, and if the second access network device can accept that the remote UE is connected to the network by using the first relay UE served by the second access network device, the HO response is, for example, an HO ACK, to indicate that the second access network device accepts that the remote UE is connected to the network by using the first relay UE served by the second access network device. Alternatively, if the second access network device cannot accept that the remote UE is connected to the network by using the first relay UE served by the second access network device, the HO response is, for example, an HO NACK, to indicate that the second access network device does not accept that the remote UE is connected to the network by using the first relay UE served by the second access network device.

If the handover request response is the HO ACK, and the HO ACK indicates that the second access network device accepts that the remote UE is connected to the network by using the first relay UE served by the second access network device, optionally, the handover request response may further include the frequency information of the cell in which the first relay UE is located, and/or includes the PCI of the cell in which the first relay UE is located. For the first access network device, if the first air interface frequency information is configured for the remote UE in S301, the first access network device may verify whether a frequency corresponding to the frequency information of the cell in which the first relay UE is located belongs to the frequency corresponding to the first air interface frequency information. If the frequency corresponding to the frequency information of the cell in which the first relay UE is located belongs to the frequency corresponding to the first air interface frequency information, the remote UE may be connected to the network by using the first relay UE. However, if the frequency corresponding to the frequency information of the cell in which the first relay UE is located does not belong to the frequency corresponding to the first air interface frequency information, the relay UE may need to be reselected, or the communication path of the remote UE may be re-determined.

For example, if the handover request response is the HO ACK, and the HO ACK indicates that the second access network device accepts that the remote UE is connected to the network by using the first relay UE served by the second access network device, there is a possibility that the handover request response includes the frequency information of the cell in which the first relay UE is located or the cell on which the first relay UE can camp, and/or includes the ID of the cell in which the first relay UE is located, for example, the PCI/NCI. However, all the previous messages neither include the frequency information of the cell in which the relay UE is located nor include the frequency information of the cell on which the relay UE can camp (for example, in S301, the configuration information is not used to configured the first cell information and the first air interface frequency information; the fourth message does not include the information about the first frequency, that is, does not include the frequency information of the cell on which the first relay UE is located; and the fifth message does not query the frequency information of the cell in which the first relay UE is located, does not query the frequency information of the cell in which or on which the first relay UE can work or can camp, and does not query whether the first relay UE has camped on or can camp on the cell at the second frequency; in addition, in S303, the remote UE may not send the frequency information of the relay UE on the Uu interface to the access network device). In this case, it is equivalent to the following: The first access network device may select the first relay UE without knowing the frequency of the cell in which the first relay UE is located. The handover request response includes the frequency information of the cell in which the first relay UE is located. The first access network device may determine whether the frequency information is a working or camping frequency that is of the relay UE that the remote UE expects to access and that is on an air interface. If the frequency information is the working or camping frequency that is of the relay UE that the remote UE expects to access and that is on an air interface, the first access network device may determine that the first relay UE is available, and the remote UE may be connected to the network by using the first relay UE. However, if the frequency information is not the working or camping frequency that is of the relay UE that the remote UE expects to access and that is on an air interface, the first access network device may reselect remote UE, or reselect a communication path for the remote UE. In this manner, frequency information does not need to be included in a plurality of messages, thereby helping reduce signaling overheads.

Alternatively, the first access network device may determine, based on the measurement result, that the communication path of the remote UE includes an added path for connecting to the network by using specific relay UE, or an added direct-connectivity path (for example, an added carrier aggregation (carrier aggregation, CA)/dual connectivity (dual connectivity, DC) secondary cell), that is, in addition to the current path, the communication path of the remote UE further includes an additionally added path. In other words, the communication path determined by the first access network device for the remote UE is a dual-connectivity or multi-connectivity path. For example, if quality of the current path of the remote UE is good, and the first access network device further expects to increase a data rate of the remote UE, a multi-connectivity path may be set for the remote UE. Alternatively, if quality of the current path of the remote UE is poor, and the remote UE urgently needs to find a new path, the first access network device may set a single-connectivity path for the remote UE, so that the remote UE is connected to the network as soon as possible. In this embodiment of this application, dual connectivity is used as an example.

Regardless of whether the first access network device needs to add a secondary cell for the remote UE or add relay UE for the remote UE, the first access network device may also send a handover request message to the second access network device. Correspondingly, the second access network device may also send a handover request message to the first access network device. For this process, refer to the foregoing description.

Optionally, if the first access network device and the second access network device are a same access network device, processes of the handover request message and the handover request response may not need to be performed.

In addition, optionally, if the remote UE is added with another communication path instead of switching the communication path in this embodiment of this application, for example, the first access network device needs to add a secondary cell or relay UE for the remote UE, the foregoing processes of the handover request message and the handover request response may not need to be performed. Optionally, the first access network device may alternatively perform a negotiation process with the second access network device. A process is similar to that of the handover request message and the handover request response.

S305: The first access network device sends an RRC reconfiguration (RRC reconfiguration) message to the remote UE. Correspondingly, the remote UE receives the RRC reconfiguration message from the first access network device.

If the communication path determined by the first access network device for the remote UE is to hand over to the second cell served by the second access network device, the RRC reconfiguration message may indicate the remote UE to hand over to the second cell. Alternatively, if the communication path determined by the first access network device for the remote UE is to switch to connecting to the network by using the first relay UE served by the second access network device, the RRC reconfiguration message may indicate the remote UE to hand over to the first relay UE. Alternatively, if the communication path determined by the first access network device for the remote UE is to add, as a secondary cell, the second cell served by the second access network device, the RRC reconfiguration message may indicate the remote UE to add the second cell as the secondary cell. Alternatively, if the communication path determined by the first access network device for the remote UE is to add a path for connecting to the network by using the first relay UE served by the second access network device, the RRC reconfiguration message may indicate the remote UE to add the path for connecting to the network by using the first relay UE.

Optionally, if the RRC reconfiguration message indicates the remote UE to hand over to the first relay UE, or indicate the remote UE to add a path for connecting to the network by using the first relay UE, the RRC reconfiguration message may include one or more of the identifier of the first relay UE, the identifier of the cell in which the first relay UE is located, or a cell-radio network temporary identifier (cell-radio network temporary identifier, C-RNTI) of the first relay UE. The identifier of the cell in which the first relay UE is located includes, for example, an NCI and/or a PCI of the cell. For example, the handover request response includes the PCI of the cell in which the first relay UE is located. In this case, optionally, the RRC reconfiguration message includes the PCI of the cell in which the first relay UE is located. This is equivalent to the following: The PCI that is of the cell in which the first relay UE is located and that is stored in the second access network device may be transferred to the remote UE.

S306: The remote UE establishes a connection to the first relay UE, where the connection is, for example, a unicast connection.

If the RRC reconfiguration message indicates the remote UE to hand over to the first relay UE, or indicates the remote UE to add the path for connecting to the network by using the first relay UE, the remote UE may perform S306 and a subsequent step. However, if the RRC reconfiguration message indicates the remote UE to hand over to the second cell, or the RRC reconfiguration message indicates the remote UE to add the second cell as a secondary cell, the remote UE does not need to perform S306 and a subsequent step. For example, the remote UE may access the second cell. This embodiment of this application mainly describes a case in which the remote UE hands over to the first relay UE or the first relay UE is added.

In addition, if the remote UE has established the connection to the first relay UE, S306 may not need to be performed.

Optionally, after the remote UE establishes the connection to the first relay UE, the first relay UE may send the PCI of the cell in which the first relay UE is located to the remote UE. In the case, the RRC reconfiguration message in S305 may include or may not include the PCI of the cell in which the first relay UE is located. In other words, the remote UE may obtain, in a plurality of manners, the PCI of the cell in which the first relay UE is located. For example, the PCI is sent by the first relay UE to the remote UE, or is sent by an access network device (for example, the second access network device) to the remote UE.

It is possible that the first relay UE only can camp on a cell configured based on the configuration information, but currently does not camp on the cell; or it is possible that the first relay UE only can camp on a cell at a frequency configured based on the configuration information, but currently does not camp on the cell at the frequency. Therefore, optionally, after establishing the connection to the first relay UE, the remote UE may further send first indication information to the first relay UE. The first indication information indicates the first relay UE to reselect a cell corresponding to the cell information configured based on the configuration information, or indicates the first relay device to reselect a cell at a frequency corresponding to the air interface frequency information configured based on the configuration information. The first relay UE may reselect a corresponding cell based on the first indication information, to provide a relay service for the remote UE.

S307: The second access network device sends an RRC reconfiguration message to the first relay UE. Correspondingly, the first relay UE receives the RRC reconfiguration message from the second access network device. For differentiation, the RRC reconfiguration message in S305 may alternatively be referred to as a first RRC reconfiguration message, and the RRC reconfiguration message in S307 may alternatively be referred to as a second RRC reconfiguration message.

The second RRC reconfiguration message may be used to configure the first relay UE, so that the remote UE can be connected to the network by using the first relay UE.

Optionally, if the first access network device and the second access network device are a same access network device, S307 may be replaced with the following: The first access network device sends an RRC reconfiguration message to the first relay UE. Correspondingly, the first relay UE receives the RRC reconfiguration message from the first access network device.

S308: The first relay UE sends an RRC reconfiguration complete message to the second access network device. Correspondingly, the second access network device receives the RRC reconfiguration complete message from the first relay UE. After completing configuration based on the second RRC reconfiguration message, the first relay UE may perform S308. S307 and S308 indicates information exchange between the first relay UE and the access network device after the first relay UE enters an RRC connected state.

Optionally, if the first access network device and the second access network device are a same access network device, S308 may be replaced with the following: The first relay UE sends an RRC reconfiguration complete message to the first access network device. Correspondingly, the first access network device receives the RRC reconfiguration complete message from the first relay UE. For example, the RRC reconfiguration complete message in S308 is referred to as a second RRC reconfiguration complete message.

S309: The remote UE sends an RRC reconfiguration complete message. For example, the remote UE sends the RRC reconfiguration message to the first relay UE, and the first relay UE receives the RRC reconfiguration complete message from the remote UE. Subsequently, the first relay UE sends the RRC reconfiguration complete message to the second access network device, and the second access network device receives the RRC reconfiguration message from the first relay UE. For example, the RRC reconfiguration complete message in S309 is referred to as a first RRC reconfiguration complete message.

For example, when the path of the first relay UE is the path added by the first access network device for the remote UE, after a connection between the first relay UE and the second access network device is successfully established (for example, the first relay UE successfully randomly accesses a second network device, or a timer T300 or a timer T301 stops, or the first relay UE enters the RRC connected state), and after the remote UE receives an indication from the first relay UE, the remote UE may send the first RRC reconfiguration complete message to the first access network device.

Optionally, if the first access network device and the second access network device are a same access network device, in S309, the remote UE sends the first RRC reconfiguration complete message to the first relay UE, and the first relay UE receives the first RRC reconfiguration complete message from the remote UE. Subsequently, the first relay UE sends the first RRC reconfiguration complete message to the first access network device, and the first access network device receives the first RRC reconfiguration message from the first relay UE. Alternatively, after receiving a message that the first relay UE is successfully accessed, the remote UE sends the first RRC reconfiguration complete message to the first access network device.

After the remote UE establishes the connection to the first relay UE, if the first relay UE is in an RRC idle state or an RRC inactive state, optionally, after receiving the first RRC reconfiguration complete message from the remote UE, the first relay UE may be triggered to enter the RRC connected state and access the second access network device. The second access network device may alternatively be referred to as a target network device. Therefore, the step S309 in which the remote UE sends the first RRC reconfiguration complete message to the first relay UE may occur before S307 or may occur after S307.

The first relay UE does not parse the first RRC reconfiguration complete message from the remote UE. In this case, the first relay UE may be triggered to enter the RRC connected state in a plurality of manners.

Because the first relay UE learns a PC5 radio link control (radio link control, RLC) configuration (for example, the PC5 RLC configuration is a default PC5 RLC configuration, or is configured by the remote UE by using a PC5 RRC message) of the first RRC reconfiguration complete message, the first relay UE may determine, based on whether there is a specific PC5 LCID or based on a data packet received on an SL RLC bearer, that is, based on whether a logical channel identifier (logical channel ID, LCID) of the RRC reconfiguration complete message is sent or whether a data packet is received on an SL RLC bearer, whether the first relay UE needs to be triggered to enter the RRC connected state. For example, when the first relay UE is in the RRC idle state, if the first relay UE receives any message that is from L2 U2N (UE to Network) remote UE and that is transmitted through SL-RLC 1 (sidelink RLC 1, an RLC channel used to transmit an SRB 1 of the remote UE on a sidelink), an RRC layer of the first relay UE may initiate an RRC connection establishment process, to enter the RRC connected state. For another example, when the first relay UE is in the RRC inactive state, if the first relay UE receives any message that is from the L2 U2N remote UE and that is transmitted through the SL-RLC 1 (sidelink RLC 1, the RLC channel used to transmit the SRB 1 of the remote UE on the sidelink), the RRC layer of the first relay UE may initiate an RRC connection resume process, to enter the RRC connected state.

However, because the first relay UE receives the message on the SL-RLC, and does not send the message to the RRC layer of the first relay UE for parsing, the RRC layer of the first relay UE needs a bottom layer of the first relay UE to notify the RRC layer of the first relay UE of whether the SL-RLC receives the data packet.

In a possible manner, if the RRC layer of the first relay UE determines that the first relay UE is in the RRC idle state or the RRC inactive state, and receives an indication that a MAC layer or an RLC layer receives a data packet at a specific LCID, the RRC layer may determine that a condition for the first relay UE to enter the RRC connected state is met. In this case, the RRC layer may notify a non-access stratum (non-access stratum, NAS) of the first relay UE that the first relay UE needs to enter the RRC connected state. The NAS delivers an indication to the RRC layer, to trigger the RRC layer to initiate the RRC connection establishment process or the RRC connection resume process, so as to enter the RRC connected state.

For example, when the MAC layer receives a MAC service data unit (service data unit, SDU) on a logical channel whose source (source) L2 ID is equal to X and whose LCID (where the LCID is an LCID of the logical channel carrying the first RRC reconfiguration complete message) is equal to 1, if the MAC SDU is a first MAC SDU received on the logical channel whose source L2 ID is equal to X and whose LCID is equal to 1, the MAC layer determines whether data is previously received on a logical channel whose source L2 ID is equal to X and whose LCID (where the LCID is an ID of a logical channel that carries an RRC connection establishment request message or an RRC connection resume request message) is equal to 0. If the data is not received, an indication is sent to the RRC layer, to indicate that the MAC layer receives the data packet at the specific LCID.

For another example, when an RLC bearer (for example, the SL-RLC 1) corresponding to an LCID (an LCID carrying the RRC reconfiguration complete message) that is equal to 1 receives an RLC protocol data unit (protocol data unit, PDU), if the RLC PDU is a first RLC PDU received on the RLC bearer, the RLC layer may send an indication to the RRC layer, to indicate that the RLC layer receives the data packet at the specific LCID.

In another possible manner, if the RRC layer of the first relay UE determines that the relay UE is in the RRC inactive state, and receives an indication that a MAC layer or an RLC layer receives a data packet at a specific LCID, the RRC layer determines that a condition for the first relay UE to enter the RRC connected state is met. In this case, the RRC layer may initiate the RRC connection resume process, to trigger entering the RRC connected state.

For example, when the MAC layer receives a MAC SDU on a logical channel whose source L2 ID is equal to X and whose LCID (an LCID carrying the RRC reconfiguration complete message) is equal to 1, if the MAC SDU is a first MAC SDU received on the logical channel whose source L2 ID is equal to X and whose LCID is equal to 1, the MAC layer determines whether data is previously received on a logical channel whose source L2 ID is equal to X and whose LCID (carrying an RRC connection establishment request message or an RRC connection resume request message) is equal to 0. If the data is not received, an indication is sent to the RRC layer, to indicate that the MAC layer receives the data packet at the specific LCID.

For another example, when an RLC bearer (for example, the SL-RLC 1) corresponding to the LCID (the LCID carrying the RRC reconfiguration complete message) that is equal to 1 receives an RLC PDU, if the RLC PDU is a first RLC PDU received on the RLC bearer, the RLC layer may send an indication to the RRC layer, to indicate that the RLC layer receives the data packet at the specific LCID.

A process in which the RRC layer of the first relay UE determines whether to enter the RRC connected state may also be applicable to relay UE in the RRC idle state or the RRC inactive state. For example, after receiving a connection establishment request message from remote UE in the RRC idle state or receiving a connection resume request message from remote UE in the RRC inactive state, the UE in the RRC idle state or the RRC inactive state may determine, in the manner described above, whether to enter the RRC connected state.

In this case, the remote UE may be connected to the network by using the first relay UE. If the remote UE switches to the path, the remote UE needs to be disconnected from an original communication path. For example, the remote UE needs to release a connection to the first access network device. However, if the remote UE is added with the path, the remote UE does not need to be disconnected from an original communication path. For example, the remote UE may be directly connected to the first access network device, or may be connected to the network by using the first relay UE, thereby improving a throughput rate of the remote UE.

S305 to S309 are all optional steps.

In this embodiment of this application, the first access network device can learn the frequency information of the cell in which the relay UE is located, so that the first access network device can select more appropriate relay UE when selecting relay UE for the remote UE. For example, the first access network device may select, for the remote UE, relay UE that works on a high frequency on an air interface, so that a data rate of the remote UE can be improved. In addition, the remote UE may perform communication through a single-connectivity communication path, or may perform communication through a multi-connectivity communication path. This improves communication flexibility of the remote UE, and also helps improve a throughput rate of the remote UE.

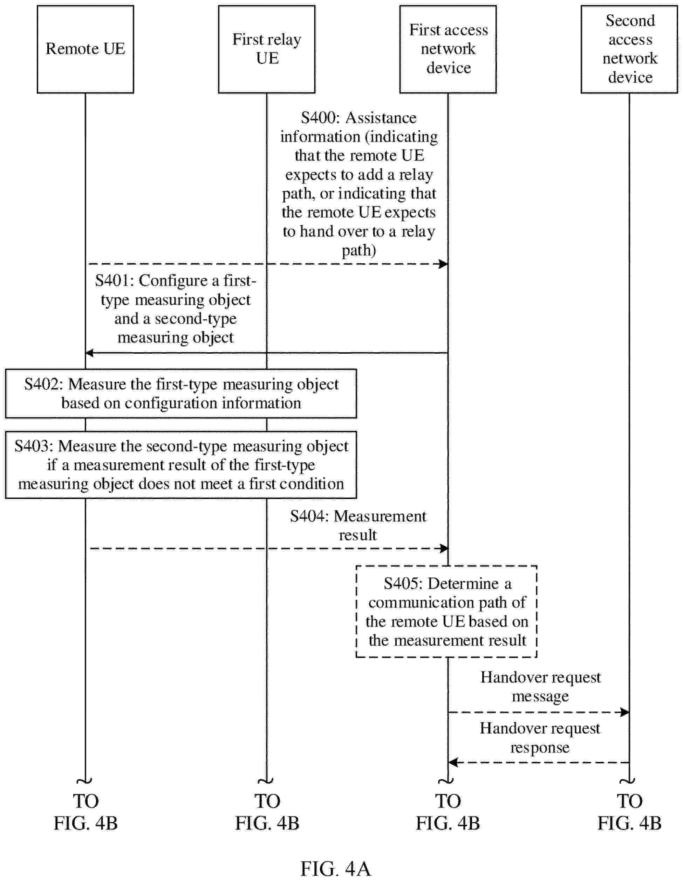

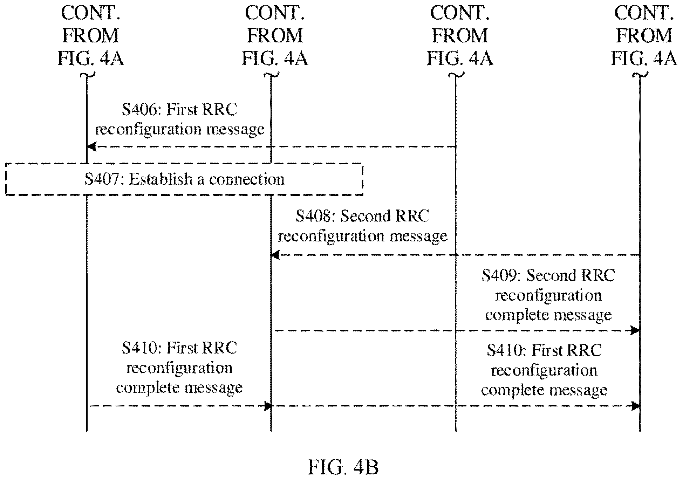

The embodiment shown in FIG. 3A and FIG. 3B relates to a measurement process performed by the remote UE. For example, the remote UE may measure a measuring object on a Uu interface, or may measure a measuring object (or an SL measuring object) on a PC5 interface. If the remote UE simultaneously starts the two measurement processes, power consumption of the remote UE is high. If the access network device configures the remote UE to perform only one of the measurement processes, measurement results obtained by the remote UE may not meet a reporting condition, or although measurement results meet a reporting condition, all the measurement results are poor. In this case, the access network device may further need to configure the remote UE to perform the other measurement process. In this way, a measurement delay caused thereby is large. Therefore, an embodiment of this application provides a third communication method. In the method, the remote UE may perform measurement according to a corresponding policy, so that a case in which power consumption is excessively high because two measurement processes need to be simultaneously started is avoided, and a case in which a measurement delay is excessively high because only one measurement process can be performed is also avoided. FIG. 4A and FIG. 4B are a flowchart of the method.

S400: Remote UE sends assistance information to a first access network device. Correspondingly, the first access network device receives the assistance information from the remote UE.

S400 is an optional step. For more content in S400, for example, a description of the assistance information, refer to S300 in the embodiment shown in FIG. 3A.

S401: An access network device sends configuration information to the remote UE. Correspondingly, the remote UE receives the configuration information from the access network device.

The configuration information may be used to configure a measuring object. For example, the configuration information may be used to configure a first-type measuring object and a second-type measuring object. A communication path that is of the remote UE and that corresponds to the first-type measuring object and a communication path that is of the remote UE and that corresponds to the second-type measuring object are different. For example, the first-type measuring object is a Uu interface measuring object (or an air interface measuring object), and the second-type measuring object is an SL measuring object (or a PC5 interface measuring object). For another example, the second-type measuring object is a Uu interface measuring object, and the first-type measuring object is an SL measuring object. A communication path that is of the remote UE and that corresponds to the Uu interface measuring object is a Uu interface communication path, and a communication path that is of the remote UE and that corresponds to the SL measuring object is an SL. It can be learned that the communication paths that are of the remote UE and that correspond to the two types of measuring objects are different.

The SL measuring object includes, for example, an SL measurement frequency. The air interface measuring object includes, for example, an air interface measurement frequency (or includes an air interface measurement frequency and cell information, and the air interface measurement frequency is used as an example in this embodiment of this application). The configuration information may be used to configure one or more SL measuring objects, or may be used to configure one or more air interface measuring objects. Optionally, the SL measuring object may be associated with the air interface measuring object. For example, one air interface measurement frequency configured based on the configuration information may be associated with some or all SL measurement frequencies configured based on the configuration information. That one air interface measurement frequency is associated with one SL measurement frequency means that to-be-measured relay UE needs to work or camp on the air interface measurement frequency on a Uu interface, and the relay UE needs to work on the SL measurement frequency on a PC5 interface.

In addition, optionally, the configuration information may further include a first threshold. The first threshold is, for example, a threshold corresponding to the first-type measuring object, or a threshold corresponding to a measurement result of the first-type measuring object.

S402: The remote UE measures the first-type measuring object based on the configuration information.

For example, M first-type measuring objects and N second-type measuring objects are configured based on the configuration information, where both M and N are positive integers. If the first-type measuring object is, for example, an air interface measuring object, the remote UE may measure the M air interface measuring objects configured based on the configuration information. Alternatively, if the first-type measuring object is, for example, an SL measuring object, the remote UE may measure the N SL measuring objects configured based on the configuration information.

S403: If the measurement result of the first-type measuring object does not meet a first condition, the remote UE measures the second-type measuring object, or in other words, the remote UE starts measurement on the second-type measuring object. Alternatively, if the measurement result of the first-type measuring object meets a first condition, the remote UE may not measure the second-type measuring object, or in other words, the remote UE may not start measurement on the second-type measuring object.

Both S402 and S403 in FIG. 4A cover the first relay UE. This only represents that the remote UE measures the relay UE, and does not mean that first relay UE is included in both a measurement process of the first-type measuring object and a measurement process of the second-type measuring object. It may be understood as the following: The first relay UE may be included in both the measurement process of the first-type measuring object and the measurement process of the second-type measuring object; or the first relay UE is included in the measurement process of the first-type measuring object, but is not included in the measurement process of the second-type measuring object; or the first relay UE is included in the measurement process of the second-type measuring object, but is not included in the measurement process of the first-type measuring obj ect.

There may be different determining manners for determining whether the measurement result of the first-type measuring object meets the first condition. For example, in one determining manner, if none of measurement results of the M measuring objects configured based on the configuration information meets the first condition, it is considered that the measurement result of the first-type measuring object does not meet the first condition. However, provided that any one of the measurement results of the M measuring objects meets the first condition, it is considered that the measurement result of the first-type measuring object meets the first condition. In this case, the remote UE may start to measure the N second-type measuring objects. This is equivalent to the following: The remote UE may determine, after measuring all the M measuring objects, whether to start the measurement process of the second-type measuring object.

Alternatively, in another determining manner, the M measuring objects are separately measured and determined. For example, one measuring object (for example, referred to as a measurement result of a first measuring object) in the M measuring objects meets the first condition. In this case, it is considered that the measurement result of the first-type measuring object meets the first condition, and the remote UE may continue to measure a next measuring object, for example, referred to as a second measuring object, in the M measuring objects. However, if the measurement result of the first measuring object does not meet the first condition, it is considered that the measurement result of the first-type measuring object does not meet the first condition. In this case, the remote UE may start to measure the second-type measuring object. The second-type measuring objects measured by the remote UE in this case are, for example, K second-type measuring objects that have an association relationship with the first measuring object. The remote UE may temporarily not measure the N-K second-type measuring objects, where K is a positive integer less than or equal to N. For example, after measuring the K second-type measuring objects, the remote UE may measure a next measuring object, for example, the second measuring object, in the M measuring objects again, and determine whether a measurement result of the second measuring object meets the first condition. The rest is deduced by analogy. This is equivalent to the following: The remote UE separately performs determining on each first-type measuring object, to determine whether to start measurement on a second-type measuring object corresponding to the first-type measuring object.

For example, the first-type measuring object is an air interface measuring object, the second-type measuring object is an SL measuring object, the M measuring objects are M air interface frequencies, and the N measuring objects are N SL frequencies. The remote UE may measure a cell at a first air interface frequency of the M air interface frequencies. Provided that a measurement result of any cell at the first air interface frequency meets the first condition, the remote UE considers that a measurement result of the first air interface frequency meets the first condition, and the remote UE may continue to measure a next air interface frequency (for example, a second air interface frequency) in the M air interface frequencies. However, if none of measurement results of all cells that can be measured at the first air interface frequency meets the first condition, the remote UE considers that the measurement result of the first air interface frequency does not meet the first condition, and the remote UE may measure SL frequencies that are associated with the first air interface frequency and that are in the N SL frequencies, that is, measure relay UEs that work on these SL frequencies and that are on a sidelink. After measuring these SL frequencies, the remote UE may start to measure a next air interface frequency (for example, the second air interface frequency) in the M air interface frequencies. The rest is deduced by analogy.

For another example, the first-type measuring object is an SL measuring object, the second-type measuring object is an air interface measuring object, the M measuring objects are M SL frequencies, and the N measuring objects are N air interface frequencies. The remote UE may measure SL frequencies associated with the first air interface frequency in the M air interface frequencies. For example, these SL frequencies are referred to as a first SL frequency, and the first SL frequency may include one or more SL frequencies. Provided that a measurement result of any relay UE at the first SL frequency meets the first condition, the remote UE considers that a measurement result of the first SL frequency meets the first condition, and the remote UE may continue to measure SL frequencies associated with a next air interface frequency (for example, the second air interface frequency) in the M air interface frequencies. However, if none of measurement results of all relay UEs that can be measured at the first SL frequency meets the first condition, the remote UE considers that the measurement result of the first SL frequency does not meet the first condition, and the remote UE may measure the first air interface frequency, that is, measure a cell at the first air interface frequency. After measuring the first air interface frequency, the remote UE may start to measure SL frequencies associated with a next air interface frequency (for example, the second air interface frequency) in the M air interface frequencies. The rest is deduced by analogy.

Optionally, whether a measurement result of one first-type measuring object meets the first condition is, for example, whether a value of the measurement result is less than a first threshold. If the value of the measurement result is less than the first threshold, it is considered that the measurement result does not meet the first condition. However, if the value of the measurement result is greater than or equal to the first threshold, it is considered that the measurement result meets the first condition. Alternatively, in addition to this implementation, the first condition may further have another implementation. This is not specifically limited.

It should be noted that even a measurement result of one first-type measuring object may include one or more measurement results. For example, the first-type measuring object is an air interface measuring object. The first measuring object is used as an example. The first measuring object is, for example, an air interface frequency, and the measurement result of the first measuring object may include measurement results of one or more cells at the air interface frequency, that is, the measurement result of the first measuring object may include one or more measurement results. In this case, among the one or more measurement results of the first measuring object, provided that one measurement result meets the first condition (for example, a value of the measurement result is greater than or equal to the first threshold), it is considered that the measurement result of the first measuring object meets the first condition. However, if none of the one or more measurement results of the first measuring object meets the first condition (for example, a value of each measurement result in a plurality of measurement results is less than the first threshold), it is considered that the measurement result of the first measuring object does not meet the first condition.

For another example, the first-type measuring object is an SL measuring object. For example, one first-type measuring object is one SL frequency. In this case, a measurement result of the SL frequency may also include measurement results of one or more relay UEs that work on the SL frequency and that are on the sidelink, that is, the measurement result of the SL frequency may also include one or more measurement results. In this case, provided that one of the one or more measurement results of the SL frequency meets the first condition, it is considered that the measurement result of the SL frequency meets the first condition. However, if none of the one or more measurement results of the SL frequency meets the first condition, it is considered that the measurement result of the SL frequency does not meet the first condition.

It can be learned from the foregoing that if the measurement result of the first-type measuring object meets the first condition, the remote UE may not measure the second-type measuring object. However, if the measurement result of the first-type measuring object does not meet the first condition, the remote UE may measure the second-type measuring object.

S404: The remote UE sends a measurement result to the access network device. Correspondingly, the access network device receives the measurement result from the remote UE.

If the remote UE does not start the measurement process of the second-type measuring object, the measurement result obtained by the remote UE includes the measurement result of the first-type measuring object, and the measurement result sent by the remote UE to the access network device also includes the measurement result of the first-type measuring object. Alternatively, if the remote UE starts the measurement process of the second-type object, the measurement result obtained by the remote UE may include the measurement result of the first-type measuring object and a measurement result of the second-type measuring object, and the measurement result sent by the remote UE to the access network device may include the measurement result of the first-type measuring object and/or the measurement result of the second-type measuring object. The remote UE determines, based on whether a measurement event is triggered, whether a measurement result reporting condition is met, and determines whether the remote UE sends the measurement result to the access network device. The measurement result may include all or some of the measurement results obtained by the remote UE.

S405: The access network device determines the communication path of the remote UE based on the measurement result. A second access network device may be involved in S405. Therefore, the access network device that performs S401 to S405 may alternatively be referred to as the first access network device.

For more content in S405, refer to S304 in the embodiment shown in FIG. 3A.

S406: The first access network device sends an RRC reconfiguration message to the remote UE. Correspondingly, the remote UE receives the RRC reconfiguration message from the first access network device.

For more content in S406, refer to S305 in the embodiment shown in FIG. 3B.

S407: The remote UE establishes a connection to the first relay UE, where the connection is, for example, a unicast connection.

For more content in S407, refer to S306 in the embodiment shown in FIG. 3B.

S408: The second access network device sends an RRC reconfiguration message to the first relay UE. Correspondingly, the first relay UE receives the RRC reconfiguration message from the second access network device. For differentiation, the RRC reconfiguration message in S406 may alternatively be referred to as a first RRC reconfiguration message, and the RRC reconfiguration message in S408 may alternatively be referred to as a second RRC reconfiguration message.

The second RRC reconfiguration message may be used to configure the first relay UE, so that the remote UE can be connected to the network by using the first relay UE.

S409: The first relay UE sends a second RRC reconfiguration complete message to the second access network device. Correspondingly, the second access network device receives the second RRC reconfiguration complete message from the first relay UE. After completing configuration based on the second RRC reconfiguration message, the first relay UE may perform S409. S408 and S409 indicates information exchange between the first relay UE and the access network device after the first relay UE enters an RRC connected state.

S410: The remote UE sends a first RRC reconfiguration complete message. For example, the remote UE sends the first RRC reconfiguration message to the first relay UE, and the first relay UE receives the first RRC reconfiguration complete message from the remote UE. Subsequently, the first relay UE sends the first RRC reconfiguration complete message to the second access network device, and the second access network device receives the first RRC reconfiguration message from the first relay UE.

For another example, when the path of the first relay UE is the path added by the first access network device for the remote UE, after a connection between the first relay UE and the second access network device is successfully established (for example, the first relay UE successfully randomly accesses a second network device, or a timer T300 or a timer T301 stops, or the first relay UE enters the RRC connected state), and after the remote UE receives an indication from the first relay UE, the remote UE may send the first RRC reconfiguration complete message to the first access network device.

Similarly, the first access network device and the second access network device may be different access network devices, or may be a same access network device. If the first access network device and the second access network device are a same access network device, for implementations of S408 to S410, refer to S307 to S309 in the embodiment shown in FIG. 3B.

S404 to S410 are all optional steps.

In this embodiment of this application, although the access network device may configure two types of measuring objects, the remote UE determines, based on the first condition, a specific type of measuring object to be measured. In this case, the remote UE may not need to measure both the two types of measuring objects, thereby reducing power consumption. In addition, the access network device does not need to separately configure a measuring object, and the remote UE may determine a specific type of measuring object to be measured, thereby reducing a measurement delay.

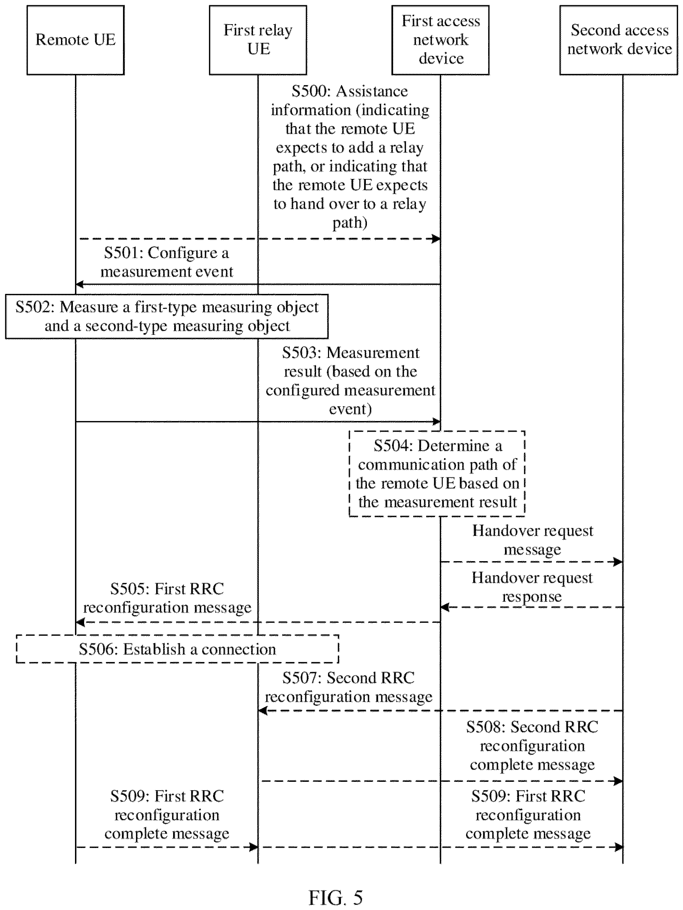

The access network device may have an expectation for a specific type of communication path selected for the remote UE. For example, the access network device may expect to select, for the remote UE, a path directly connected to the access network device, or may expect to select, for the remote UE, a path connected by using relay UE. However, when sending the measurement result to the access network device, the remote UE may send two types of measurement results (a Uu interface measurement result and an SL measurement result). For the access network device, some measurement results may be redundant. In addition, transmission overheads are wasted. Therefore, an embodiment of this application provides a fourth communication method. According to the method, remote UE may pertinently send a measurement result to an access network device, so that the sent measurement result better meets a requirement of the access network device. This reduces transmission overheads. FIG. 5 is a flowchart of the method.

S500: Remote UE sends assistance information to a first access network device. Correspondingly, the first access network device receives the assistance information from the remote UE.

S500 is an optional step. For more content in S500, for example, an interpretation of the assistance information, refer to S300 in the embodiment shown in FIG. 3A.

S501: An access network device sends configuration information to the remote UE. Correspondingly, the remote UE receives the configuration information from the access network device.

The configuration information may be used to configure a measurement event. For example, the measurement event configured based on the configuration information includes: A value of a measurement result of a first-type measuring object is less than a first threshold, and a value of a measurement result of a second-type measuring object is greater than or equal to a second threshold. It is equivalent to the following: One type of measurement event is configured based on the configuration information. When the measurement event is triggered, the remote UE sends a measurement result in the measurement event to the access network device.

For another example, the measurement event configured based on the configuration information includes a plurality of types of measurement events, for example, includes a first measurement event, a second measurement event, and a third measurement event. The first measurement event includes: The value of the measurement result of the first-type measuring object is less than the first threshold. The second measurement event includes: The value of the measurement result of the second-type measuring object is greater than or equal to the second threshold. The third measurement event includes: The value of the measurement result of the first-type measuring object is greater than or equal to the first threshold. It is equivalent to the following: The configuration information may be used to configure a plurality of measurement events, and for a measurement result that meets any one of the measurement events, if the measurement event is triggered, the remote UE may send the measurement result to the access network device. In other words, when the first measurement event is configured for a first measuring object, if a value of a measurement result of the first measuring object is less than the first threshold, the measurement event is triggered, and the remote UE may report the measurement result to the access network device, where the first measuring object is the first-type measuring object. When the second measurement event is configured for a second measuring object, if a value of a measurement result of the second measuring object is greater than or equal to the second threshold, the measurement event is triggered, and the remote UE may send the measurement result to the access network device, where the second measuring object is the second-type measuring object. When the third measurement event is configured for a third measuring object, if a value of a measurement result of the third measuring object is greater than or equal to the first threshold, the measurement event is triggered, and the remote UE may send the measurement result to the access network device, where the third measuring object is the first-type measuring object.

Optionally, the configuration information may further be used to configure a measuring object. For example, the configuration information may be used to configure the first-type measuring object and the second-type measuring object. The first-type measuring object configured based on the configuration information includes, for example, M measuring objects, and the second-type measuring object configured based on the configuration information includes, for example, N measuring objects. In addition, there may be an association relationship between the first-type measuring object and the second-type measuring object. For this part of content, refer to S401 in the embodiment shown in FIG. 4A.

S502: The remote UE measures the first-type measuring object and the second-type measuring object.

For example, M measuring objects and N measuring objects are configured based on the configuration information. In this case, the remote UE may measure the M measuring objects and measure the N measuring objects.

S503: The remote UE sends a measurement result to the access network device based on the measurement event configured based on the configuration information. Correspondingly, the access network device receives the measurement result from the remote UE. The measurement result includes, for example, the measurement result of the first-type measuring object and/or the measurement result of the second-type measuring object.

1. A measurement event is configured based on the configuration information, that is, the value of the measurement result of the first-type measuring object is less than the first threshold, and the value of the measurement result of the second-type measuring object is greater than or equal to the second threshold. For example, the first threshold and/or the second threshold are/is predefined in a protocol, or are/is configured by the access network device.

The remote UE may perform determining on an obtained measurement result, to determine whether to send the measurement result to the access network device, or determine specific measurement results to be sent to the access network device. For example, if the value of the measurement result of the first-type measuring object is smaller than the first threshold, and the value of the measurement result of the second-type measuring object is greater than or equal to the second threshold, in this case, the measurement result of the second-type measuring object is good, but the measurement result of the first-type measuring object is poor, and even if the measurement result of the first-type measuring object is sent to the access network device, there is a low probability that the access network device can select, for the remote UE, a communication path corresponding to the first-type measuring object. Therefore, the remote UE may send the measurement result of the second-type measuring object to the access network device, but does not send the measurement result of the first-type measuring object.

Alternatively, if the value of the measurement result of the first-type measuring object is greater than or equal to the first threshold, in this case, the measurement result of the first-type measuring object is good. For example, the communication path corresponding to the first-type measuring object is a communication path that the access network device expects to select for the remote UE. Therefore, regardless of whether the value of the measurement result of the second-type measuring object is greater than or equal to the second threshold, the remote UE may send the measurement result of the first-type measuring object to the access network device, and does not need to send the measurement result of the second-type measuring object.

Alternatively, if the value of the measurement result of the first-type measuring object is less than the first threshold, and the value of the measurement result of the second-type measuring object is less than the second threshold, it indicates that the measurement results of the two measuring objects are both poor, and the access network device probably cannot determine the communication path of the remote UE from the measurement results. Therefore, the remote UE may not send the measurement result to the access network device, and neither the measurement result of the first-type measuring object nor the measurement result of the second-type measuring object is sent, that is, S503 is not performed.

Optionally, the first-type measuring object and the second-type measuring object under the measurement condition may not have an association relationship, or it is understood as the following: whether the first-type measuring object and the second-type measuring object under the measurement condition have an association relationship is not considered.

For example, the first-type measuring object configured based on the configuration information includes M measuring objects, and the second-type measuring object configured based on the configuration information includes N measuring objects. For example, the first-type measuring object is an air interface measuring object, and the second-type measuring object is an SL measuring object. In this case, the M measuring objects are M air interface frequencies, and the N measuring objects are N SL frequencies. Measurement results of the M air interface frequencies may include measurement results of one or more cells at the M air interface frequencies. In these measurement results, provided that a value of one measurement result is greater than or equal to the first threshold, the remote UE may send the measurement result to the access network device, and does not need to send the measurement result of the second-type measuring object. Alternatively, if values of all measurement results (for example, all the measurement results of the one or more cells) corresponding to the M air interface frequencies are less than the first threshold, and in measurement results of the N SL frequencies, a value of a measurement result of relay UE is greater than or equal to the second threshold (where the measurement results of the N SL frequencies may include measurement results of one or more relay UEs that work on the N SL frequencies and that are on the sidelink), the remote UE may send the measurement result of the relay UE to the access network device, and does not need to send the measurement result of the first-type measuring object. Alternatively, if values of all measurement results corresponding to the M air interface frequencies are less than the first threshold, and values of all measurement results corresponding to the N SL frequencies are less than the second threshold, the remote UE may not send the measurement result to the access network device.

Alternatively, Optionally, the first-type measuring object and the second-type measuring object under the measurement condition may have an association relationship. In other words, the measurement condition is, for example, as follows: The value of the measurement result of the first-type measuring object is less than the first threshold, and a value of a measurement result of a second-type measuring object that has an association relationship with the first-type measuring object is greater than or equal to the second threshold.

For example, the first-type measuring object configured based on the configuration information includes M measuring objects, and the second-type measuring object configured based on the configuration information includes N measuring objects. In this case, the remote UE may separately perform determining on each of the M measuring objects. For example, the first-type measuring object is an air interface measuring object, and the second-type measuring object is an SL measuring object. In this case, the M measuring objects are M air interface frequencies, and the N measuring objects are N SL frequencies. For a first air interface frequency in the M air interface frequencies, the remote UE may measure one or more cells at the first air interface frequency, to obtain one or more measurement results. In these measurement results, provided that a value of one measurement result is greater than the first threshold, the remote UE may send the measurement result to the access network device, and does not need to send a measurement result of an SL frequency corresponding to the first air interface frequency. If values of all measurement results corresponding to the first air interface frequency are less than or equal to the first threshold, and in measurement results of the SL frequencies corresponding to the first air interface frequency, a value of a measurement result is greater than the second threshold, the remote UE may send, to the access network device, the measurement result whose value is greater than the second threshold, and does not need to send the measurement result corresponding to the first air interface frequency. Alternatively, if values of all measurement results corresponding to the first air interface frequency are less than or equal to the first threshold, and values of all measurement results corresponding to the SL frequencies that correspond to the first air interface frequency are less than or equal to the second threshold, the remote UE may not send the measurement results to the access network device. For another air interface frequency in the M air interface frequencies, the remote UE may use a similar processing manner.

For another example, the first-type measuring object is an SL measuring object, and the second-type measuring object is an air interface measuring object. In this case, the M measuring objects are M SL frequencies, and the N measuring objects are N air interface frequencies. For a first air interface frequency in the N air interface frequencies, the remote UE may measure SL frequencies that have an association relationship with the first air interface frequency, that is, measure relay UEs that work on these SL frequencies and that are on the sidelink, to obtain one or more measurement results. In these measurement results, provided that a value of one measurement result is greater than the first threshold, the remote UE may send the measurement result to the access network device, and does not need to send the measurement result of the first air interface frequency. If values of all measurement results corresponding to these SL frequencies are less than or equal to the first threshold, and in the measurement results of the first air interface frequency, a value of a measurement result is greater than the second threshold, the remote UE may send, to the access network device, the measurement result whose value is greater than the second threshold, and does not need to send the measurement result of the SL frequency corresponding to the first air interface frequency. Alternatively, if values of all measurement results corresponding to these SL frequencies are less than or equal to the first threshold, and values of all measurement results corresponding to the first air interface frequency are less than or equal to the second threshold, the remote UE may not send the measurement result to the access network device. For another air interface frequency in the N air interface frequencies, the remote UE may use a similar processing manner.

For another example, a measurement event configured for the SL measuring object is as follows: A value of a measurement result of an air interface neighboring cell is less than the first threshold, and a value of a measurement result of neighbor (neighbor) relay UE is greater than or equal to the second threshold. The measurement results of the M air interface frequencies may include measurement results of one or more cells under the M air interface frequencies. In these measurement results, provided that a value of one measurement result is greater than or equal to the first threshold (that is, a measurement result of a specific neighboring cell at the M air interface frequencies is good), measurement reporting of the SL measuring object is not triggered, and the remote UE does not need to send a measurement result of the SL measuring object. However, if all the values of the measurement results (for example, all the measurement results of the one or more cells) of the M air interface frequencies are less than the first threshold, and the value of the measurement result of the neighbor relay UE measured on the SL measuring object is greater than the second threshold, the remote UE is triggered to send the measurement result of the SL measuring object to the access network device. That is, the remote UE may send the measurement result of the neighbor relay UE to the access network device.

Alternatively, a measurement event configured for the SL measuring object is as follows: A measurement result of a neighboring cell on a measuring object (namely, a specific frequency) of a specific air interface MO is less than the first threshold, and a measurement result of neighbor relay UE is greater than or equal to the second threshold. If values of all measurement results (for example, all the measurement results of the one or more cells) corresponding to the air interface frequency are less than the first threshold, and in measurement results of the SL frequency, a value of a measurement result of relay UE is greater than or equal to the second threshold (where the measurement results of the SL frequency may include measurement results of one or more relay UEs that work on the SL frequency and that are on the sidelink), measurement reporting of the remote UE is triggered, and the remote UE may send the measurement result of the relay UE to the access network device. The measurement event is configured, and if the access network device determines that air interface quality is good, the access network device may not configure a relay path, to avoid, as much as possible, reporting a useless measurement result by the remote UE, thereby reducing power consumption for the remote UE.

For another example, a measurement event configured for the air interface measuring object is as follows: A measurement result of the SL measuring object is less than the first threshold, and a measurement result of a neighboring cell on the air interface measuring object is greater than or equal to the second threshold. The measurement results of the N SL frequencies may include measurement results of one or more cells at the N SL frequencies. In these measurement results, provided that a value of one measurement result is greater than or equal to the first threshold (that is, a measurement result of specific neighbor relay UE at the N SL frequencies is good), air interface measurement reporting is not triggered, and the remote UE does not need to send the measurement result of the air interface measuring object. However, if all values of the measurement results (for example, all the measurement results of the one or more relay UEs) of the N SL frequencies are less than the first threshold, and a result of the neighboring cell measured on the air interface measuring object is greater than or equal to the second threshold, the remote UE is triggered to send, to the access network device, the measurement result that is of the air interface measuring object and that is in the measurement results.

Alternatively, a measurement event configured for the air interface measuring object is as follows: A measurement result of neighbor relay UE on a measuring object (namely, a specific SL frequency) at a specific SL frequency is less than the first threshold, and a measurement result of an air interface neighboring cell is greater than or equal to the second threshold. If values of all measurement results (for example, all the measurement results of the one or more relay UEs) corresponding to the SL frequency are less than the first threshold, and in the measurement results of the air interface frequency, a value of a measurement result of a neighboring cell is greater than or equal to the second threshold (where the measurement results of the air interface frequency may include measurement results of one or more cells that work on the air interface frequency), measurement reporting is triggered, and the remote UE may send, to the access network device, the measurement result, in the measurement results, that is of the air interface frequency and whose value is greater than or equal to the second threshold. The measurement event is configured, and if the access network device has determined that a relay path is good, the access network device may not configure a Uu path, to avoid, as much as possible, reporting a useless measurement result by the remote UE, thereby reducing power consumption for the remote UE.

2. A plurality of types of measurement events are configured based on the configuration information. For example, a first measurement event, a second measurement event, and a third measurement event are configured.

The remote UE may perform determining on an obtained measurement result, to determine whether to send the measurement result to the access network device, or determine specific measurement results to be sent to the access network device. For example, if the value of the measurement result of the first-type measuring object is less than the first threshold, the remote UE may send the measurement result to the access network device. If the value of the measurement result of the second-type measuring object is greater than or equal to the second threshold, the remote UE may send the measurement result to the access network device. If the value of the measurement result of the first-type measuring object is greater than or equal to the first threshold, the remote UE may send the measurement result to the access network device.

Optionally, in this configuration manner, the remote UE may not need to consider an association relationship between the first-type measuring object and the second-type measuring object, and may only select a measurement result based on a corresponding measurement event. For example, the first-type measuring object configured based on the configuration information includes M measuring objects, and the M measuring objects are, for example, M measurement frequencies. An example in which the M measurement frequencies are M air interface frequencies is used. For a first air interface frequency in the M air interface frequencies, the remote UE measures one or more cells at the first air interface frequency, to obtain one or more measurement results. In these measurement results, if a value of a measurement result is greater than or equal to the first threshold, the remote UE may send the measurement result whose value is greater than or equal to the first threshold to the access network device. In these measurement results, if a value of a measurement result is less than the first threshold, the remote UE may also send the measurement result whose value is less than the first threshold to the access network device. For another air interface frequency in the M air interface frequencies, the remote UE uses a same processing manner.

Alternatively, an example in which the M measurement frequencies are M SL frequencies is used. For a first SL frequency in the M SL frequencies, the remote UE measures one or more relay UEs that work on the first SL frequency and that are on the sidelink, to obtain one or more measurement results. In these measurement results, if a value of a measurement result is greater than or equal to the first threshold, the remote UE may send the measurement result whose value is greater than or equal to the first threshold to the access network device. In these measurement results, if a value of a measurement result is less than the first threshold, the remote UE may also send the measurement result whose value is less than the first threshold to the access network device. For another air interface frequency in the M air interface frequencies, the remote UE uses a same processing manner.

For example, the second-type measuring object configured based on the configuration information includes N measuring objects, and the N measuring objects are, for example, N measurement frequencies. An example in which the N measurement frequencies are N air interface frequencies is used. For a second air interface frequency in the N air interface frequencies, the remote UE measures one or more cells at the second air interface frequency, to obtain one or more measurement results. In these measurement results, if a value of a measurement result is greater than or equal to the second threshold, the remote UE may send the measurement result whose value is greater than or equal to the second threshold to the access network device. In these measurement results, a measurement result whose value is less than the second threshold may not be sent by the remote UE to the access network device. For another air interface frequency in the M air interface frequencies, the remote UE uses a same processing manner.

Alternatively, an example in which the N measurement frequencies are N SL frequencies is used. For a second SL frequency in the N SL frequencies, the remote UE measures one or more relay UEs that work on the second SL frequency and that are on the sidelink, to obtain one or more measurement results. In these measurement results, if a value of a measurement result is greater than or equal to the second threshold, the remote UE may send the measurement result whose value is greater than or equal to the second threshold to the access network device. In these measurement results, a measurement result whose value is less than the second threshold may not be sent by the remote UE to the access network device. For another SL frequency in the M SL frequencies, the remote UE uses a same processing manner.

For another example, the access network device first configures an air interface measuring object for the remote UE, and a measurement event configured for the air interface measuring object is as follows: A value of a measurement result of an air interface neighboring cell is less than the first threshold. Measurement results of the M air interface frequencies may include measurement results of one or more cells at the M air interface frequencies. In these measurement results, provided that a value of one measurement result is greater than or equal to the first threshold (that is, a measurement result of a specific neighboring cell at the M air interface frequencies is good), air interface measurement reporting is not triggered, and the remote UE does not need to send the measurement results of the M air interface frequencies. However, if the remote UE fails to measure the air interface frequency, or all values of the measurement results of the M air interface frequencies measured by the remote UE are less than the first threshold, measurement reporting of the air interface measuring object is triggered, and the remote UE sends the measurement result of the air interface measuring object to the access network device. The foregoing measurement event is configured, so that the access network device can obtain a case of a poor air interface in a timely manner, and configure a new measurement event for the remote UE in a timely manner. In this way, the remote UE can measure the SL in a timely manner, thereby shortening time for adding a new communication path for the remote UE. Optionally, the access network device may configure an SL measuring object and a measurement event for the remote UE when determining that an air interface is poor. For example, the measurement event is as follows: A value of a measurement result of neighbor relay UE measured on the SL measuring object is greater than or equal to the second threshold. The remote UE may measure the SL measuring object. If a value of a measurement result (for example, that the remote UE measures the SL measuring object may include measuring one or more relay UEs that work on a frequency corresponding to the SL measuring object and that are on the sidelink, and the measurement result herein may include some or all of measurement results thereof) of the relay UE is greater than the second threshold, measurement reporting is triggered, and the remote UE may send, to the access network device, an SL measurement result whose value is greater than or equal to the second threshold. Alternatively, if all measurement results obtained by the remote UE by measuring the SL measuring object are less than the second threshold, or the remote UE obtains no measurement result, measurement reporting is not triggered. The measurement event on the SL is triggered and reported, so that the access network device can further configure a relay path for the remote UE based on the measurement result.

For another example, the access network device first configures an SL measuring object for the remote UE, and a measurement event configured for the SL measuring object is as follows: A value of a measurement result of relay UE measured on the SL measuring object is less than the first threshold. A measurement result of each SL frequency may include measurement results of one or more relay UEs. In these measurement results, provided that a value of one measurement result is greater than or equal to the first threshold (that is, a measurement result of specific relay UE on the SL is good), measurement reporting of the SL measuring object is not triggered, and the remote UE does not need to send the measurement result of the SL measuring object. However, if the remote UE fails to measure the SL measuring object, or a value of the measurement result of the SL measuring object measured by the remote UE is less than the first threshold (for example, all values of measurement results of all relay UEs corresponding to the SL measuring object are less than the first threshold), measurement reporting of the SL measuring object is triggered, and the remote UE sends a result of the SL measuring object to the access network device. The foregoing measurement event is configured, so that the access network device can obtain a case of poor SL quality in a timely manner, and configure a new measurement event for the remote UE in a timely manner. In this way, the remote UE can measure an air interface in a timely manner, thereby shortening time for adding a new communication path for the remote UE. Optionally, the access network device may configure an air interface measuring object and a measurement event for the remote UE when determining that the SL is poor. For example, the measurement event is as follows: A value of a measurement result of a neighboring cell measured on the air interface measuring object is greater than or equal to the second threshold. The remote UE may measure the air interface measuring object. If a value of a measurement result (for example, that the remote UE measures the air interface measuring object may include measuring one or more cells at an air interface frequency corresponding to the air interface measuring object, and the measurement result herein may include all or some of measurement results thereof) of the measured cell is greater than the second threshold, measurement reporting is triggered, and the remote UE may send, to the access network device, an air interface measurement result whose value is greater than or equal to the second threshold. Alternatively, if all values of measurement results obtained by the remote UE by measuring the air interface measuring obj ect are less than the second threshold, or the remote UE obtains no measurement result, measurement reporting is not triggered. The measurement event on the air interface is triggered and reported, so that the access network device can further configure, for the remote UE, a direct-connectivity path to the network based on the measurement result.

S504: The access network device determines the communication path of the remote UE based on the measurement result. A second access network device may be involved in S504. Therefore, the access network device that performs S501 to S504 may alternatively be referred to as the first access network device.

For more content in S504, refer to S304 in the embodiment shown in FIG. 3A.

S505: The first access network device sends an RRC reconfiguration message to the remote UE. Correspondingly, the remote UE receives the RRC reconfiguration message from the first access network device.

For more content in S505, refer to S305 in the embodiment shown in FIG. 3B.

S506: The remote UE establishes a connection to the first relay UE, where the connection is, for example, a unicast connection.

For more content in S506, refer to S306 in the embodiment shown in FIG. 3B.

S507: The second access network device sends an RRC reconfiguration message to the first relay UE. Correspondingly, the first relay UE receives the RRC reconfiguration message from the second access network device. For differentiation, the RRC reconfiguration message in S505 may alternatively be referred to as a first RRC reconfiguration message, and the RRC reconfiguration message in S507 may alternatively be referred to as a second RRC reconfiguration message.

The second RRC reconfiguration message may be used to configure the first relay UE, so that the remote UE can be connected to the network by using the first relay UE.

S508: The first relay UE sends a second RRC reconfiguration complete message to the second access network device. Correspondingly, the second access network device receives the second RRC reconfiguration complete message from the first relay UE. After completing configuration based on the second RRC reconfiguration message, the first relay UE may perform S508. S507 and S508 indicates information exchange between the first relay UE and the access network device after the first relay UE enters an RRC connected state.

S509: The remote UE sends a first RRC reconfiguration complete message. For example, the remote UE sends the first RRC reconfiguration message to the first relay UE, and the first relay UE receives the first RRC reconfiguration complete message from the remote UE. Subsequently, the first relay UE sends the first RRC reconfiguration complete message to the second access network device, and the second access network device receives the first RRC reconfiguration message from the first relay UE.

For another example, when the path of the first relay UE is the path added by the first access network device for the remote UE, after a connection between the first relay UE and the second access network device is successfully established (for example, the first relay UE successfully randomly accesses the second access network device, or a timer T300 or a timer T301 stops, or the first relay UE enters the RRC connected state), and after the remote UE receives an indication from the first relay UE, the remote UE may send the first RRC reconfiguration complete message to the first access network device.

Similarly, the first access network device and the second access network device may be different access network devices, or may be a same access network device. If the first access network device and the second access network device are a same access network device, for implementations of S507 to S509, refer to S307 to S309 in the embodiment shown in FIG. 3B.

S504 to S509 are all optional steps.

In this embodiment of this application, the access network device may select a preferably reported measurement result based on the configured measurement event, and the remote UE may send the measurement result to the access network device based on the measurement event, so that the sent measurement result better meets a requirement of the access network device, thereby reducing redundant reporting of the remote UE, and reducing transmission overheads.

Currently, before the remote UE is added with a relay path or before the remote UE switches to a relay path, relay UE searched for by the remote UE may be in an RRC idle state or an RRC inactive state. When relay UE selected by the remote UE or selected by the access network device is in the RRC idle state or the RRC inactive state, the relay UE needs to enter the RRC connected state. Currently, a reasonable manner is as follows: The remote UE sends an RRC configuration complete message to the access network device by using relay UE, and the relay UE triggers the relay UE to enter the RRC connected state by receiving the RRC configuration complete message. However, an RRC layer of the relay UE does not parse a message from the remote UE. Therefore, it can be learned that in the current solution, the relay UE cannot learn a specific message that is the RRC configuration complete message, and may not enter the RRC connected state. Similarly, the remote UE in the RRC idle state or the RRC inactive state expects to send a connection establishment request message or a connection resume message to relay UE when the relay UE in the RRC idle state or the RRC inactive state performs a service, or when the relay UE in the RRC idle state or the RRC inactive state initiates connection reestablishment, so that the relay UE can be triggered to enter the RRC connected state. However, the RRC layer of the relay UE does not parse a message from the remote UE. Therefore, in the current solution, the relay UE still cannot learn a specific message that is the connection establishment request message or the connection resume message, and still cannot enter the RRC connected state.

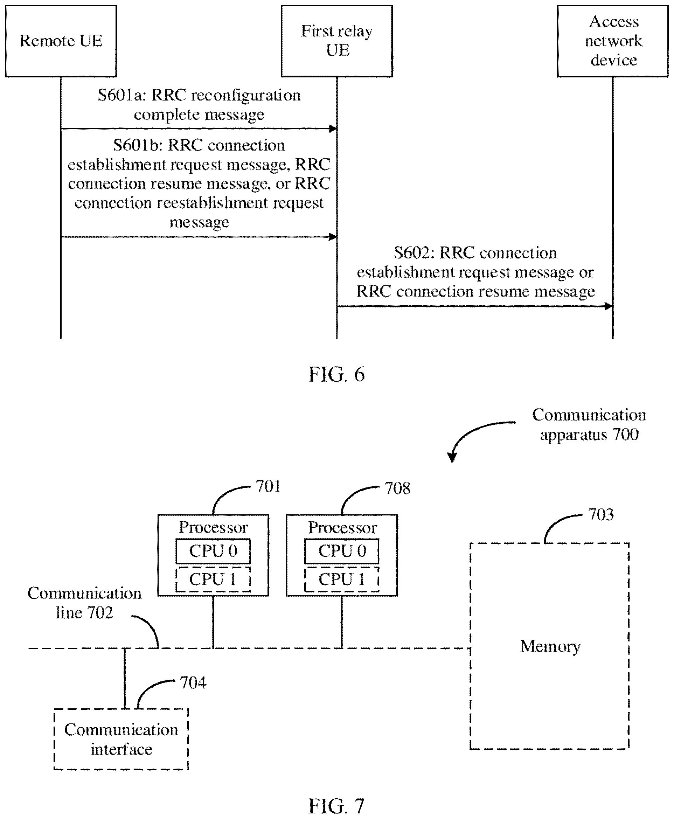

In view of this, an embodiment of this application provides a sixth communication method. In this method, the relay UE may determine, based on whether a first data packet is received by a logical channel or an RLC entity that receives a message on the sidelink, whether the relay UE needs to enter the RRC connected state. This provides an implementation mechanism for the relay UE to enter the RRC connected state. FIG. 6 is a flowchart of the method.

S601a: Remote UE sends an RRC reconfiguration complete message to relay UE. Correspondingly, the relay UE receives the RRC reconfiguration complete message from the remote UE.

Because first relay UE learns a PC5 RLC configuration (for example, the PC5 RLC configuration is a default PC5 RLC configuration, or is configured by the remote UE through PC5 RRC) used to send the RRC reconfiguration complete message, the first relay UE may determine, based on whether there is a specific PC5 LCID or whether a data packet is received on an SL RLC bearer, or in other words, based on whether a data packet is received on an LCID or SL RLC bearer for sending the RRC reconfiguration complete message, whether the first relay UE needs to be triggered to enter the RRC connected state. For example, when the first relay UE is in an RRC idle state, if the first relay UE receives any message that is from L2 U2N remote UE and that is transmitted through SL-RLC 1 (sidelink RLC 1, an RLC channel used to transmit an SRB 1 of the remote UE on a sidelink), an RRC layer of the first relay UE may initiate an RRC connection establishment process, to enter the RRC connected state. For another example, when the first relay UE is in an RRC inactive state, if the first relay UE receives any message that is from the L2 U2N remote UE and that is transmitted through the SL-RLC 1 (sidelink RLC 1, the RLC channel used to transmit the SRB 1 of the remote UE on the sidelink), the RRC layer of the first relay UE may initiate an RRC connection resume process, to enter the RRC connected state.

However, because the first relay UE receives the message on the SL-RLC, and does not send the message to the RRC layer of the first relay UE for parsing, the RRC layer of the first relay UE needs a bottom layer to notify the RRC layer of the first relay UE of whether the SL-RLC receives the data packet.

In a possible manner, if the RRC layer of the first relay UE determines that the first relay UE is in the RRC idle state or the RRC inactive state, and receives an indication that a MAC layer or an RLC layer receives a data packet at a specific LCID, the RRC layer may determine that a condition for the first relay UE to enter the RRC connected state is met. In this case, the RRC layer of the first relay UE may notify a NAS of the first relay UE that the first relay UE needs to enter the RRC connected state. The NAS may deliver an indication to the RRC layer, to trigger the RRC layer to initiate the RRC connection establishment process or the RRC connection resume process, so as to enter the RRC connected state.

For example, when the MAC layer receives a MAC SDU on a logical channel whose source L2 ID is equal to X and whose LCID (an LCID of a logical channel carrying the RRC reconfiguration complete message) is equal to 1, if the MAC SDU is a first MAC SDU received on the logical channel whose source L2 ID is equal to X and whose LCID is equal to 1, the MAC layer determines whether data is previously received on a logical channel whose source L2 ID is equal to X and whose LCID (an LCID of a logical channel carrying an RRC connection establishment request message or an RRC connection resume request message) is equal to 0. If the data is not received, the MAC layer may send an indication to the RRC layer, to indicate that the data packet is received at the specific LCID.

For another example, when an RLC bearer (for example, the SL-RLC 1) corresponding to the LCID (the LCID of the logical channel carrying the RRC reconfiguration complete message) that is equal to 1 receives an RLC PDU, if the RLC PDU is a first RLC PDU received on the RLC bearer, the RLC layer may send an indication to the RRC layer, to indicate that the data packet is received at the specific LCID.

In another possible manner, if the RRC layer of the first relay UE determines that the relay UE is in the RRC inactive state, and receives an indication that a MAC layer or an RLC layer receives a data packet at a specific LCID, the RRC layer determines that a condition for the first relay UE to enter the RRC connected state is met. In this case, the RRC layer may initiate the RRC connection resume process, to trigger entering the RRC connected state.

For example, when the MAC layer receives a MAC SDU on a logical channel whose source L2 ID is equal to X and whose LCID (an LCID of a logical channel carrying the RRC reconfiguration complete message) is equal to 1, if the MAC SDU is a first MAC SDU received on the logical channel whose source L2 ID is equal to X and whose LCID is equal to 1, the MAC layer determines whether data is previously received on a logical channel whose source L2 ID is equal to X and whose LCID (an LCID of a logical channel carrying an RRC connection establishment request message or an RRC connection resume request message) is equal to 0. If the data is not received, the MAC layer may send an indication to the RRC layer, to indicate that the data packet is received at the specific LCID.

For another example, when an RLC bearer (for example, the SL-RLC 1) corresponding to the LCID (the LCID of the logical channel carrying the RRC reconfiguration complete message) that is equal to 1 receives an RLC PDU, if the RLC PDU is a first RLC PDU received on the RLC bearer, the RLC layer may send an indication to the RRC layer, to indicate that the data packet is received at the specific LCID.

S601b: The remote UE sends an RRC connection establishment request message to the relay UE, and correspondingly, the relay UE receives the RRC connection establishment request message from the remote UE. Alternatively, the remote UE sends an RRC connection resume message to the relay UE, and correspondingly, the relay UE receives the RRC connection resume message from the remote UE. Alternatively, the remote UE sends an RRC connection reestablishment request message to the relay UE, and correspondingly, the relay UE receives the RRC connection reestablishment request message from the remote UE.

Because the first relay UE learns a PC5 RLC configuration (for example, the PC5 RLC configuration is a default PC5 RLC configuration) used to send the RRC connection establishment request message, the RRC connection resume message, or the RRC connection reestablishment request message, the first relay UE may determine, based on whether there is a specific PC5 LCID or whether a data packet is received on an SL RLC bearer, or in other words, based on whether a data packet is received on an LCID or SL RLC bearer configured to send the RRC reconfiguration complete message, whether the first relay UE needs to be triggered to enter the RRC connected state. For example, when the first relay UE is in the RRC idle state, if the first relay UE receives any message that is from the L2 U2N remote UE and that is transmitted through SL-RLC 0 (sidelink RLC 0, an RLC channel used to transmit an SRB 0 of the remote UE on the sidelink), the RRC layer of the first relay UE may initiate an RRC connection establishment process, to enter the RRC connected state. For another example, when the first relay UE is in the RRC inactive state, if the first relay UE receives any message that is from the L2 U2N remote UE and that is transmitted through the SL-RLC 0 (sidelink RLC 0, the RLC channel used to transmit the SRB 0 of the remote UE on the sidelink), the RRC layer of the first relay UE may initiate an RRC connection resume process, to enter the RRC connected state.

However, because the first relay UE receives the message on the SL-RLC, and does not send the message to the RRC layer of the first relay UE for parsing, the RRC layer of the first relay UE needs a bottom layer to notify the RRC layer of the first relay UE of whether the SL-RLC receives the data packet.

In a possible manner, if the RRC layer of the first relay UE determines that the first relay UE is in the RRC idle state or the RRC inactive state, and receives an indication that a MAC layer or an RLC layer receives a data packet at a specific LCID, the RRC layer may determine that a condition for the first relay UE to enter the RRC connected state is met. In this case, the RRC layer may notify the NAS of the first relay UE that the first relay UE needs to enter the RRC connected state. The NAS delivers an indication to the RRC layer, to trigger the RRC layer to initiate the RRC connection establishment process or the RRC connection resume process, so as to enter the RRC connected state.

For example, when the MAC layer receives a MAC SDU on a logical channel whose source L2 ID is equal to X and whose LCID (an LCID of a logical channel carrying the RRC connection establishment request message, the RRC connection resume message, or the RRC connection reestablishment request message) is equal to 0, if the MAC SDU is a first MAC SDU received on the logical channel whose source L2 ID is equal to X and whose LCID is equal to 0, the MAC layer may send an indication to the RRC layer, to indicate that the data packet is received at the specific LCID.

For another example, when an RLC bearer (for example, the SL-RLC 0) corresponding to the LCID (the LCID of the logical channel carrying the RRC connection establishment request message, the RRC connection resume message, or the RRC connection reestablishment request message) that is equal to 0 receives an RLC PDU, if the RLC PDU is a first RLC PDU received on the RLC bearer, the RLC layer may send an indication to the RRC layer, to indicate that the data packet is received at the specific LCID.

In another possible manner, if the RRC layer of the first relay UE determines that the relay UE is in the RRC inactive state, and receives an indication that a MAC layer or an RLC layer receives a data packet at a specific LCID, the RRC layer may determine that a condition for the first relay UE to enter the RRC connected state is met. In this case, the RRC layer may initiate the RRC connection resume process, to trigger entering the RRC connected state.

For example, when the MAC layer receives a MAC SDU on a logical channel whose source L2 ID is equal to X and whose LCID (an LCID of a logical channel carrying the RRC connection establishment request message, the RRC connection resume message, or the RRC connection reestablishment request message) is equal to 0, the MAC layer may send an indication to the RRC layer, to indicate that the data packet is received at the specific LCID.

For another example, when an RLC bearer (for example, the SL-RLC 0) corresponding to the LCID (the LCID of the logical channel carrying the RRC connection establishment request message, the RRC connection resume message, or the RRC connection reestablishment request message) that is equal to 0 receives an RLC PDU, if the RLC PDU is a first RLC PDU received on the RLC bearer, the RLC layer may send an indication to the RRC layer, to indicate that the data packet is received at the specific LCID.

S601a and S601b are two optional implementations, and it may be considered that the two are in an "and/or" relationship.

S602: The relay UE sends the RRC connection establishment request message to an access network device, and correspondingly, the access network device receives the RRC connection establishment request message sent by the relay UE. Alternatively, the first relay UE sends the RRC connection resume message to the access network device, and correspondingly, the access network device receives the RRC connection resume message sent by the relay UE.

The first relay UE may enter the RRC connected state by performing S602, to provide a corresponding service for the remote UE.

Any two or more embodiments of the embodiment shown in FIG. 2 to the embodiment shown in FIG. 6 provided in this application may be combined for application. For example, the remote UE performs a measurement process according to the embodiment shown in FIG. 3A and FIG. 3B, and determines a to-be-reported measurement result according to the embodiment shown in FIG. 5. Alternatively, the remote UE performs measurement according to the embodiment shown in FIG. 4A and FIG. 4B, and determines a to-be-reported measurement result according to the embodiment shown in FIG. 5. Alternatively, the remote UE performs a measurement process according to the embodiment shown in FIG. 3A and FIG. 3B, performs measurement according to the embodiment shown in FIG. 4A and FIG. 4B, and determines a to-be-reported measurement result according to the embodiment shown in FIG. 5, or performs measurement according to the embodiments shown in FIG. 2 to FIG. 5, and enables the relay UE to enter the RRC connected state and the like according to the solution in FIG. 6. Alternatively, the embodiment shown in FIG. 2 to the embodiment shown in FIG. 6 may not be combined, but are applied separately and individually.

FIG. 7 is a schematic diagram of a structure of a communication apparatus according to an embodiment of this application. The communication apparatus 700 may be the remote UE or a circuit system of the remote UE according to any one of the embodiment shown in FIG. 2 to the embodiment shown in FIG. 6, and is configured to implement the method corresponding to the remote UE in the foregoing method embodiments. Alternatively, the communication apparatus 700 may be the relay UE (for example, the first relay UE) or a circuit system of the relay UE according to any one of the embodiment shown in FIG. 2 to the embodiment shown in FIG. 6, and is configured to implement the method corresponding to the relay UE in the foregoing method embodiments. Alternatively, the communication apparatus 700 may be the access network device or a circuit system of the access network device according to any one of the embodiment shown in FIG. 2 to the embodiment shown in FIG. 6, and is configured to implement the method corresponding to the access network device in the foregoing method embodiments. Alternatively, the communication apparatus 700 may be the first access network device or a circuit system of the first access network device according to any one of the embodiment shown in FIG. 2 to the embodiment shown in FIG. 5, and is configured to implement the method corresponding to the first access network device in the foregoing method embodiments. Alternatively, the communication apparatus 700 may be the second access network device or a circuit system of the second access network device according to any one of the embodiment shown in FIG. 2 to the embodiment shown in FIG. 5, and is configured to implement the method corresponding to the second access network device in the foregoing method embodiments. For a specific function, refer to the descriptions in the foregoing method embodiments. For example, the circuit system is a chip system.

The communication apparatus 700 includes at least one processor 701. The processor 701 may be configured for internal processing of the apparatus, to implement a specific control processing function. Optionally, the processor 701 includes instructions. Optionally, the processor 701 may store data. Optionally, different processors may be independent components, may be located in different physical locations, or may be located on different integrated circuits. Optionally, different processors may be integrated into one or more processors, for example, integrated into one or more integrated circuits.

Optionally, the communication apparatus 700 includes one or more memories 703, configured to store instructions. Optionally, the memory 703 may further store data. The processor and the memory may be separately disposed, or may be integrated together.

Optionally, the communication apparatus 700 includes a communication line 702 and at least one communication interface 704. Because the memory 703, the communication line 702, and the communication interface 704 are all optional, the memory 703, the communication line 702, and the communication interface 704 are all represented by dashed lines in FIG. 7.

Optionally, the communication apparatus 700 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 700 by using the antenna. Optionally, the transceiver includes a transmitter (transmitter) and a receiver (receiver). For example, the transmitter may be configured to generate a radio frequency (radio frequency) signal based on a baseband signal, and the receiver may be configured to convert a radio frequency signal into a baseband signal.

The processor 701 may include a general-purpose central processing unit (central processing unit, CPU), a microprocessor, an application-specific integrated circuit (application-specific integrated circuit, ASIC), or one or more integrated circuits configured to control program execution of the solutions of this application.

The communication line 702 may include a path, to transfer information between the foregoing components.

The communication interface 704 is configured to communicate with another device or a communication network like an ethernet, a radio access network (radio access network, RAN), a wireless local area network (wireless local area network, WLAN), or a wired access network by using any apparatus like a transceiver.

The memory 703 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another optical disc storage, optical disk storage (including a compact optical disc, a laser disc, an optical disc, a digital versatile optical disc, a Blu-ray disc, and the like), a magnetic disk storage medium or another magnetic storage device, or any other medium that can be configured to carry or store expected program code in a form of instructions or a data structure and that can be accessed by a computer, but not limited thereto. The memory 703 may exist independently and is connected to the processor 701 through the communication line 702. Alternatively, the memory 703 may be integrated with the processor 701.

The memory 703 is configured to store computer-executable instructions for executing the solutions of this application, and the processor 701 controls the execution. The processor 701 is configured to execute the computer-executable instructions stored in the memory 703, to implement the communication methods provided in the foregoing embodiments of this application.

Optionally, the computer-executable instructions in this embodiment of this application may also be referred to as application program code. This is not specifically limited in this embodiment of this application.

During specific implementation, in an embodiment, the processor 701 may include one or more CPUs, for example, a CPU 0 and a CPU 1 in FIG. 7.

During specific implementation, in an embodiment, the communication apparatus 700 may include a plurality of processors, for example, the processor 701 and a processor 708 in FIG. 7. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 7 is a chip, for example, a chip of an access network device, a chip of a UPF, a chip of an SMF, or a chip of a terminal device, the chip includes the processor 701 (and may further include the processor 708), the communication line 702, the memory 703, and the communication interface 704. Specifically, the communication interface 704 may be an input interface, a pin, a circuit, or the like. The memory 703 may be a register, a cache, or the like. The processor 701 and the processor 708 each may be a general-purpose CPU, a microprocessor, an ASIC, or one or more integrated circuits for controlling program execution for the communication method in any one of the foregoing embodiments.

In a first implementation, the communication apparatus 700 may be configured to implement the method corresponding to the UE in the foregoing embodiment of this application. For a specific function, refer to the descriptions in the foregoing embodiment.

For example, the communication apparatus 700 includes a processor 701. The processor 701 is configured to execute a computer program or instructions, so that the method corresponding to the UE in the foregoing embodiment of this application is performed. For example, the method corresponding to the remote UE (or referred to as the UE) in the foregoing embodiment of this application includes: obtaining frequency information of a first cell, where the first cell is a cell in which a first relay device is located; determining the first cell based on the frequency information of the first cell and an identifier of the first cell; and measuring the first cell, to determine whether the terminal device can serve as a remote device in the first cell.

For another example, the method corresponding to the first relay UE in the foregoing embodiment of this application includes: sending frequency information of a first cell to a terminal device, where the frequency information of the first cell is used to determine whether the terminal device can serve as a remote device in the first cell, and the first cell is a cell in which the first relay device is located.

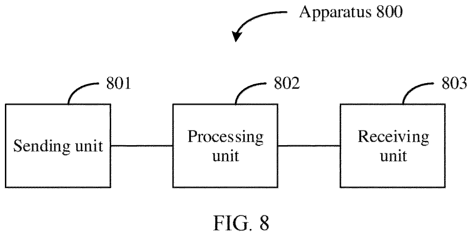

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. For example, when each functional module is obtained through division based on each corresponding function, FIG. 8 is a schematic diagram of an apparatus. An apparatus 800 may be the access network device or the terminal device in the foregoing method embodiments, or may be a chip in the access network device or a chip in the terminal device. The apparatus 800 includes a sending unit 801, a processing unit 802, and a receiving unit 803.

It should be understood that the apparatus 800 may be configured to implement the steps performed by the access network device or the terminal device in the method in embodiments of this application. For related features, refer to the foregoing embodiments. Details are not described herein again.

Optionally, functions/implementation processes of the sending unit 801, the receiving unit 803, and the processing unit 802 in FIG. 8 may be implemented by the processor 701 and/or the processor 708 in FIG. 7 by invoking the computer-executable instructions stored in the memory 703. Alternatively, the function/the implementation process of the processing unit 802 in FIG. 8 may be implemented by the processor 701 and/or the processor 708 in FIG. 7 by invoking the computer-executable instructions stored in the memory 703, and the functions/the implementation processes of the sending unit 801 and the receiving unit 803 in FIG. 8 may be implemented by using the communication interface 704 in FIG. 7.

Optionally, when the apparatus 800 is a chip or a circuit, the functions/the implementation processes of the sending unit 801 and the receiving unit 803 may alternatively be implemented by using a pin, a circuit, or the like.

This application further provides a computer-readable storage medium. The computer-readable storage medium stores a computer program or instructions. When the computer program is run or the instructions are run, the method performed by the access network device or the terminal device in the foregoing method embodiment is implemented. In this way, the function in the foregoing embodiment may be implemented in a form of a software functional unit and sold or used as an independent product. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the terminal device or the access network device in any one of the foregoing method embodiments.

An embodiment of this application further provides a processing apparatus, including a processor and an interface. The processor is configured to perform the method performed by the terminal device or the access network device in any one of the foregoing method embodiments.

All or some of the foregoing embodiments may be implemented by using software, hardware, firmware, or any combination thereof. When software is used to implement embodiments, all or some of the embodiments may be implemented in a form of a computer program product. The computer program product includes one or more computer instructions. When the computer program instructions are loaded and executed on the computer, all or some of the processes or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid state disk, SSD)), or the like.

Various illustrative logic units and circuits described in embodiments of this application may implement or operate the described functions by using a general-purpose processor, a digital signal processor (digital signal processor, DSP), an application-specific integrated circuit (application-specific integrated circuit, ASIC), a field-programmable gate array (field-programmable gate array, FPGA) or another programmable logic apparatus, a discrete gate or transistor logic, a discrete hardware component, or any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable disk, a CD-ROM, or a storage medium in any other format in this field. For example, the storage medium may be connected to a processor, so that the processor can read information from the storage medium and write information into the storage medium. Optionally, the storage medium may alternatively be integrated into the processor. The processor and the storage medium may be disposed in an ASIC, and the ASIC may be disposed in a terminal device. Optionally, the processor and the storage medium may alternatively be disposed in different components in the terminal device.

These computer program instructions may alternatively be loaded onto a computer or another programmable data processing device, so that a series of operations and steps are performed on the computer or the another programmable device to generate computer-implemented processing. Therefore, the instructions executed on the computer or the another programmable device provide steps for implementing a specific function in one or more processes in the flowcharts and/or in one or more blocks in the block diagrams.

Although embodiments of this application are described with reference to specific features and embodiments thereof, it is clear that various modifications and combinations may be made to embodiments of this application without departing from the scope of embodiments of this application. Correspondingly, embodiments of this application and the accompanying drawings are merely example descriptions of embodiments of this application that are defined by the appended claims, and are considered to cover any or all of modifications, variations, combinations, or equivalents in the scope of embodiments of this application. It is clear that a person skilled in the art may make various modifications and variations to embodiments of this application without departing from the scope of embodiments of this application. In this way, embodiments of this application are also intended to cover these modifications and variations provided that they fall within the scope of the claims of embodiments of this application and equivalent technologies thereof.

Embodiment 1: A communication method, applied to a remote device, where the method includes:
receiving configuration information from a first access network device, where the configuration information is used to configure a measurement frequency on a sidelink, and configure cell information or air interface frequency information;
measuring a first-type relay device based on the configuration information, where the first-type relay device is a relay device that works on the measurement frequency and has camped on or can camp on a cell corresponding to the cell information; or the first-type relay device is a relay device that works on the measurement frequency and has camped on or can camp on a cell at a frequency corresponding to the air interface frequency information; and
sending a measurement result to the first access network device, where the measurement result is used to determine a communication path of the remote device.

Embodiment 2: The method according to Embodiment 1, where the method further includes:
receiving a fourth message from a first relay device, where the fourth message includes information about a first frequency, and the first frequency is a frequency of a cell in which the first relay device is located or a frequency of a cell on which the first relay device can camp.

Embodiment 3: The method according to Embodiment 2, where the fourth message is a discovery message or a PC5 RRC message.

Embodiment 4: The method according to Embodiment 2 or 3, the measuring a first-type relay device based on the configuration information includes:
measuring or measuring and reporting the first relay device if the first frequency belongs to a frequency corresponding to the air interface frequency information configured based on the configuration information, or a cell corresponding to the cell information configured based on the configuration information belongs to the first frequency.

Embodiment 5: The method according to Embodiment 1, where the method further includes:
sending a fifth message to the first relay device, where the fifth message is used to query frequency information of a cell in which the first relay device is located, or is used to query frequency information of a cell on which the first relay device can camp, or is used to query whether the first relay device has camped on or can camp on a cell at a second frequency, where the second frequency is a frequency corresponding to the air interface frequency information configured based on the configuration information; and
receiving a sixth message from the first relay device, where the sixth message includes information about the second frequency, or the sixth message indicates that the first relay device has camped on or can camp on the cell at the second frequency.

Embodiment 6: The method according to any one of Embodiments 1 to 5, where the method further includes:
receiving an RRC reconfiguration message from the first access network device, where the RRC reconfiguration message indicates the remote device to hand over to a second cell, or indicates the remote device to hand over to the first relay device, or indicates the remote device to add a second cell as a secondary cell, or indicates the remote device to add a path for communicating with a network by using the first relay device, and the first relay device is one of the first-type relay devices.

Embodiment 7: The method according to Embodiment 6, where the RRC reconfiguration message further includes a PCI of the cell in which the first relay device is located.

Embodiment 8: The method according to Embodiment 6 or 7, where the RRC reconfiguration message further includes the frequency information of the cell in which the first relay device is located.

Embodiment 9: The method according to Embodiment 6, where the method further includes:
after establishing a connection to the first relay device, receiving, from the first relay device, a PCI of the cell in which the first relay device is located.

Embodiment 10: The method according to any one of Embodiments 6 to 9, where the method further includes:
after establishing the connection to the first relay device, sending first indication information to the first relay device, where the first indication information indicates the first relay device to reselect a cell corresponding to the cell information configured based on the configuration information, or indicates the first relay device to reselect a cell at a frequency corresponding to the air interface frequency information configured based on the configuration information.

Embodiment 11: The method according to any one of Embodiments 1 to 10, where the receiving configuration information from a first access network device includes: receiving, by using a second relay device, the configuration information from the first access network device.

Embodiment 12: A communication method, applied to a first relay device, where the method includes:
sending information about a third frequency to a remote device, where the third frequency is a frequency of a cell in which the first relay device is located, or a frequency of a cell on which the first relay device can camp, and the information about the third frequency is used to determine a communication path of the remote device.

Embodiment 13: The method according to Embodiment 11, where the sending information about a third frequency to a remote device includes: sending a fourth message to the remote device, where the fourth message includes the information about the third frequency.

Embodiment 14: The method according to Embodiment 13, where the fourth message is a discovery message or a PC5 RRC message.

Embodiment 15: The method according to Embodiment 13 or 14, where the third frequency is the frequency of the cell on which the first relay device can camp, and the method further includes:
after establishing a connection to the remote device, receiving first indication information from the remote device, and reselecting a cell at the third frequency based on the first indication information; or
receiving second indication information from a first access network device, and handing over to a cell at the third frequency based on the second indication information.

Embodiment 16: The method according to Embodiment 12, where the method includes:
receiving a fifth message from the remote device, where the fifth message is used to query frequency information of the cell in which the first relay device is located, or is used to query frequency information of the cell on which the first relay device can camp, or is used to query whether the first relay device has camped on or can camp on a cell at the third frequency; and
the sending information about a third frequency to a remote device includes: sending a sixth message to the remote device, where the sixth message includes the information about the third frequency, or the sixth message indicates that the first relay device has camped on or can camp on the cell at the third frequency.

Embodiment 17: The method according to Embodiment 16, where the third frequency is the frequency of the cell on which the first relay device can camp, and the method further includes: reselecting the cell at the third frequency.

Embodiment 18: The method according to any one of Embodiments 12 to 17, where the method further includes: after establishing a connection to the remote device, sending, to the remote device, a PCI of the cell in which the first relay device is located.

Embodiment 19: A communication method, applied to a first access network device, where the method includes:
sending configuration information to a remote device, where the configuration information is used to configure a measurement frequency on a sidelink, and configure cell information or air interface frequency information of a cell on which or in which a relay device that works on the measurement frequency needs to camp or work;
receiving a measurement result of the relay device from the remote device; and
determining a communication path of the remote device based on the measurement result.

Embodiment 20: The method according to Embodiment 19, where the method further includes:
sending a handover request message to a second access network device, where the handover request message is used to query whether to accept that the remote device accesses a network by using a first relay device served by the second access network device, or is used to query whether to accept that the remote device accesses a second cell served by the second access network device, and the first relay device is determined based on the measurement result; and
receiving a handover request response from the second access network device, where the handover request response indicates whether to accept that the remote device accesses the network by using the first relay device, or indicates whether to accept that the remote device accesses the second cell.

Embodiment 21: The method according to Embodiment 20, where the handover request response further includes frequency information of a cell on which the first relay device has camped or can camp.

Embodiment 22: The method according to Embodiment 21, where the method further includes:
sending an RRC reconfiguration message to the remote device, where the RRC reconfiguration message indicates the remote device to hand over to the second cell, or indicates the remote device to hand over to the first relay device, or indicates the remote device to add the second cell as a secondary cell, or indicates the remote device to add a path for communicating with the network by using the first relay device.

Embodiment 23: The method according to Embodiment 22, where the RRC reconfiguration message further includes a PCI of the cell in which the first relay device is located.

Embodiment 24: The method according to Embodiment 22 or 23, where the RRC reconfiguration message further includes frequency information of the cell in which the first relay device is located.

Embodiment 25: A communication method, applied to a first access network device, where the method includes:
sending a handover request message to a second access network device, where the handover request message is used to query whether to accept that remote device accesses a network by using a first relay device served by the second access network device, or the handover request message is used to query whether to accept that remote device accesses a second cell served by the second access network device; and
receiving a handover request response from the second access network device, where the handover request response indicates whether to accept that the remote device accesses the network by using the first relay device, or indicates whether to accept that the remote device accesses the second cell, and the handover request response further includes frequency information of a cell on which the first relay device has camped or can camp.

Embodiment 26: The method according to Embodiment 25, where the handover request response further includes a PCI of the cell in which the first relay device is located.

Embodiment 27: The method according to Embodiment 25 or 26, where the method further includes:
sending an RRC reconfiguration message to the remote device, where the RRC reconfiguration message indicates the remote device to hand over to the second cell, or indicates the remote device to hand over to the first relay device, or indicates the remote device to add the second cell as a secondary cell, or indicates the remote device to add a path for communicating with the network by using the first relay device, and the RRC reconfiguration message further includes the PCI of the cell in which the first relay device is located.

Embodiment 28: The method according to any one of Embodiments 25 to 27, where the method further includes:
determining that a frequency corresponding to the frequency information of the cell on which the first relay device has camped or can camp is an operating frequency that is of a relay device expected to serve the remote device and that is on an air interface.

Embodiment 29: A communication method, applied to a second access network device, where the method includes:
receiving a handover request message from a first access network device, where the handover request message is used to query whether to accept that remote device accesses a network by using a first relay device served by the second access network device, or the handover request message is used to query whether to accept that remote device accesses a second cell served by the second access network device; and
sending a handover request response to the first access network device, where the handover request response indicates whether to accept that the remote device accesses the network by using the first relay device, or indicates whether to accept that the remote device accesses the second cell, and the handover request response further includes frequency information of a cell on which the first relay device has camped or can camp.

Embodiment 30: The method according to Embodiment 29, where the handover request response further includes a PCI of the cell in which the first relay device is located.

Embodiment 31: A communication method, applied to a remote device, where the method includes:
receiving configuration information from an access network device, where the configuration information is used to configure a first-type measuring object and a second-type measuring object, and a communication path that is of the remote device and that corresponds to the first-type measuring object is different from a communication path that is of the remote device and that corresponds to the first-type measuring object;
measuring the first-type measuring object based on the configuration information; and
measuring the second-type measuring object if a measurement result of the first-type measuring object does not meet a first condition.

Embodiment 32: The method according to Embodiment 31, where the first-type measuring object includes M measuring objects, the second-type measuring object includes N measuring objects, and both M and N are positive integers; and that a measurement result of the first-type measuring object does not meet a first condition includes:
all values of measurement results of the M measuring objects are less than a first threshold; or
a value of a measurement result of a first measuring object in the M measuring objects is less than a first threshold.

Embodiment 33: The method according to Embodiment 32, where if that a measurement result of the first-type measuring object does not meet a first condition includes: a value of a measurement result of a first measuring object in the M measuring objects is less than a first threshold, the measuring the second-type measuring object includes:
measuring K measuring objects in the N measuring objects, where the K measuring objects have an association relationship with the first measuring object, and K is a positive integer less than or equal to N.

Embodiment 34: The method according to any one of Embodiments 31 to 33, the method further includes: skipping measuring the second-type measuring object if the measurement result of the first-type measuring object meets the first condition.

Embodiment 35: A communication method, applied to a remote device, where the method includes:
receiving configuration information from an access network device, where the configuration information is used to configure a measurement event, the measurement event includes that a value of a measurement result of a first-type measuring object is less than a first threshold and that a value of a measurement result of a second-type measuring object is greater than or equal to a second threshold, and a communication path that is of the remote device and that corresponds to the first-type measuring object is different from a communication path that is of the remote device and that corresponds to the first-type measuring object;
measuring the first-type measuring object and the second-type measuring object; and
sending the measurement result of the first-type measuring object and/or the measurement result of the second-type measuring object to the access network device based on the measurement event.

Embodiment 36: The method according to Embodiment 35, where the sending the measurement result of the first-type measuring object and/or the measurement result of the second-type measuring object to the access network device based on the measurement event includes:
sending the measurement result of the second-type measuring object to the access network device if the value of the measurement result of the first-type measuring object is less than the first threshold and the value of the measurement result of the second-type measuring object is greater than or equal to the second threshold; or
sending the measurement result of the first-type measuring object to the access network device if the value of the measurement result of the first-type measuring object is greater than or equal to the first threshold.

Embodiment 37: The method according to Embodiment 35 or 36, where
the first-type measuring object is an air interface measuring object, and the second-type measuring object is a sidelink measuring object; or
the first-type measuring object is a sidelink measuring object, and the second-type measuring object is an air interface measuring object.

Embodiment 38: A communication method, applied to a remote device, where the method includes:
receiving configuration information from an access network device, where the configuration information is used to configure a first measurement event, a second measurement event, and a third measurement event, the first measurement event includes that a value of a measurement result of a first-type measuring object is less than a first threshold, the second measurement event includes that a value of a measurement result of a second-type measuring object is greater than or equal to a second threshold, the third measurement event includes that the value of the measurement result of the first-type measuring object is greater than or equal to the first threshold, and a communication path that is of the remote device and that corresponds to the first-type measuring object is different from a communication path that is of the remote device and that corresponds to the first-type measuring object;
measuring the first-type measuring object and the second-type measuring object; and
sending the measurement result of the first-type measuring object and/or the measurement result of the second-type measuring object to the access network device based on the first measurement event, the second measurement event, and the third measurement event.

Embodiment 39: The method according to Embodiment 38, where the sending the measurement result of the first-type measuring object and/or the measurement result of the second-type measuring object to the access network device based on the first measurement event, the second measurement event, and the third measurement event includes one or more of the following:
sending the measurement result of the first-type measuring object to the access network device if the value of the measurement result of the first-type measuring object is less than the first threshold;
sending the measurement result of the first-type measuring object to the access network device if the value of the measurement result of the first-type measuring object is greater than or equal to the first threshold; or
sending the measurement result of the second-type measuring object to the access network device if the value of the measurement result of the second-type measuring object is greater than or equal to the second threshold.

Embodiment 40: The method according to Embodiment 38 or 39, where
the first-type measuring object is an air interface measuring object, and the second-type measuring object is a sidelink measuring object; or
the first-type measuring object is a sidelink measuring object, and the second-type measuring object is an air interface measuring object.

Embodiment 41: A communication device, including:
one or more processors;
one or more memories; and
one or more computer programs, where the one or more computer programs are stored in the one or more memories, the one or more computer programs include instructions, and when the instructions are executed by the one or more processors of the communication device, the communication device is enabled to perform the method according to any one of Embodiments 1 to 11, or the communication device is enabled to perform the method according to any one of Embodiments 12 to 18, or the communication device is enabled to perform the method according to any one of Embodiments 31 to 34, or the communication device is enabled to perform the method according to any one of Embodiments 35 to 37, or the communication device is enabled to perform the method according to any one of Embodiments 38 to 10.

Embodiment 42: A communication device, including:
one or more processors;
one or more memories; and
one or more computer programs, where the one or more computer programs are stored in the one or more memories, the one or more computer programs include instructions, and when the instructions are executed by the one or more processors of the communication device, the communication device is enabled to perform the method according to any one of Embodiments 19 to 24, or the communication device is enabled to perform the method according to any one of Embodiments 25 to 28, or the communication device is enabled to perform the method according to any one of Embodiments 29 to 30.

Embodiment 43: A computer-readable storage medium, where the computer-readable storage medium is configured to store a computer program, and when the computer program is run on a computer, the computer is enabled to perform the method according to any one of Embodiments 1 to 11, or the computer is enabled to perform the method according to any one of Embodiments 12 to 18, or the computer is enabled to perform the method according to any one of Embodiments 31 to 34, or the computer is enabled to perform the method according to any one of Embodiments 35 to 37, or the computer is enabled to perform the method according to any one of Embodiments 38 to 10, or the computer is enabled to perform the method according to any one of Embodiments 19 to 24, or the computer is enabled to perform the method according to any one of Embodiments 25 to 28, or the computer is enabled to perform the method according to any one of Embodiments 29 to 30.

Embodiment 44: A chip, including one or more processors and a communication interface, where the one or more processors are configured to read instructions, to perform the method according to any one of Embodiments 1 to 11, or perform the method according to any one of Embodiments 12 to 18, or perform the method according to any one of Embodiments 31 to 34, or perform the method according to any one of Embodiments 35 to 37, or perform the method according to any one of Embodiments 38 to 10, or perform the method according to any one of Embodiments 19 to 24, or perform the method according to any one of Embodiments 25 to 28, or perform the method according to any one of Embodiments 29 to 30.

Embodiment 45: An apparatus, including units for performing the method described in any one of embodiments of this application.

Embodiment 46: A computer program product, where the computer program product includes a computer program, and when the computer program is run on a computer, the computer is enabled to perform the method according to any one of Embodiments 1 to 11, or the computer is enabled to perform the method according to any one of Embodiments 12 to 18, or the computer is enabled to perform the method according to any one of Embodiments 31 to 34, or the computer is enabled to perform the method according to any one of Embodiments 35 to 37, or the computer is enabled to perform the method according to any one of Embodiments 38 to 10, or the computer is enabled to perform the method according to any one of Embodiments 19 to 24, or the computer is enabled to perform the method according to any one of Embodiments 25 to 28, or the computer is enabled to perform the method according to any one of Embodiments 29 to 30.

## Claims

1. A communication method, applied to a terminal device, wherein the method comprises:
obtaining frequency information of a first cell, wherein the first cell is a cell in which a first relay device is located;
determining the first cell based on the frequency information of the first cell and an identifier of the first cell; and
determining, based on a measurement result of the first cell, whether the terminal device can serve as a remote device in the first cell.

2. The method according to claim 1, wherein
the identifier of the first cell comprises a physical cell identity PCI of the first cell or a new radio cell identity NCI of the first cell.

3. The method according to claim 1 or 2, wherein the obtaining frequency information of a first cell comprises:
receiving a first message from the first relay device, wherein the first message comprises the frequency information of the first cell.

4. The method according to claim 1 or 2, wherein the obtaining frequency information of a first cell comprises:
sending a second message to the first relay device, wherein the second message is used to query frequency information of the cell in which the first relay device is located, or is used to query whether the first relay device has camped on a cell at a first frequency, and the first cell is the cell at the first frequency; and
receiving a first message from the first relay device, wherein the first message comprises the frequency information of the first cell, or the first message indicates that the first relay device has camped on the cell at the first frequency.

5. The method according to claim 3 or 4, wherein the first message is as follows:
a discovery message; or
a PC5 radio resource control RRC message; or
an RRC message from a serving access network device of the first relay device.

6. The method according to any one of claims 3 to 5, wherein
the first message further comprises the identifier of the first cell.

7. The method according to any one of claims 3 to 6, wherein the first message further comprises first information, and the first information indicates that the first cell is not in an access-barred state.

8. The method according to any one of claims 3 to 7, wherein the first message further comprises second information, and the second information indicates whether searching for an accessible cell at a frequency of the first cell is allowed when the first cell is in the access-barred state.

9. A communication method, applied to a first relay device, wherein the method comprises:
sending a discovery message, wherein the discovery message comprises frequency information of a first cell, the first cell is a serving cell of the first relay device, and the frequency information of the first cell is used by a remote terminal device to perform measurement, to determine whether the remote terminal device can serve as a remote device in the first cell.

10. A communication method, applied to a remote device, wherein the method comprises:
receiving configuration information from a first access network device, wherein the configuration information is used to configure a measurement frequency on a sidelink, and configure cell information or air interface frequency information;
measuring a first-type relay device based on the configuration information, wherein the first-type relay device is a relay device that works on the measurement frequency and has camped on or can camp on a cell corresponding to the cell information; or the first-type relay device is a relay device that works on the measurement frequency and has camped on or can camp on a cell at a frequency corresponding to the air interface frequency information; and
sending a measurement result to the first access network device, wherein the measurement result is used to determine a communication path of the remote device.

11. The method according to claim 10, wherein the method further comprises:
receiving a fourth message from a first relay device, wherein the fourth message comprises information about a first frequency, and the first frequency is a frequency of a cell in which the first relay device is located or a frequency of a cell on which the first relay device can camp.

12. The method according to claim 11, wherein
the fourth message is a discovery message or a PC5 RRC message.

13. The method according to claim 11 or 12, wherein the measuring a first-type relay device based on the configuration information comprises:
measuring or measuring and reporting the first relay device if the first frequency belongs to a frequency corresponding to the air interface frequency information configured based on the configuration information, or a cell corresponding to the cell information configured based on the configuration information belongs to the first frequency.

14. The method according to claim 10, wherein the method further comprises:
sending a fifth message to the first relay device, wherein the fifth message is used to query frequency information of a cell in which the first relay device is located, or is used to query frequency information of a cell on which the first relay device can camp, or is used to query whether the first relay device has camped on or can camp on a cell at a second frequency, wherein the second frequency is a frequency corresponding to the air interface frequency information configured based on the configuration information; and
receiving a sixth message from the first relay device, wherein the sixth message comprises information about the second frequency, or the sixth message indicates that the first relay device has camped on or can camp on the cell at the second frequency.

15. The method according to any one of claims 10 to 14, wherein the method further comprises:
receiving an RRC reconfiguration message from the first access network device, wherein the RRC reconfiguration message indicates the remote device to hand over to a second cell, or indicates the remote device to hand over to the first relay device, or indicates the remote device to add a second cell as a secondary cell, or indicates the remote device to add a path for communicating with a network by using the first relay device, and the first relay device is one of the first-type relay devices.

16. The method according to claim 15, wherein the RRC reconfiguration message further comprises a PCI of the cell in which the first relay device is located.

17. The method according to claim 15 or 16, wherein the RRC reconfiguration message further comprises the frequency information of the cell in which the first relay device is located.

18. The method according to claim 15, wherein the method further comprises:
after establishing a connection to the first relay device, receiving, from the first relay device, a PCI of the cell in which the first relay device is located.

19. The method according to any one of claims 15 to 18, wherein the method further comprises:
after establishing the connection to the first relay device, sending first indication information to the first relay device, wherein the first indication information indicates the first relay device to reselect a cell corresponding to the cell information configured based on the configuration information, or indicates the first relay device to reselect a cell at a frequency corresponding to the air interface frequency information configured based on the configuration information.

20. The method according to any one of claims 10 to 19, wherein the receiving configuration information from a first access network device comprises:
receiving the configuration information from the first access network device by using a second relay device.

21. A communication method, applied to a first relay device, wherein the method comprises:
sending information about a third frequency to a remote device, wherein the third frequency is a frequency of a cell in which the first relay device is located, or a frequency of a cell on which the first relay device can camp, and the information about the third frequency is used to determine a communication path of the remote device.

22. The method according to claim 21, wherein the sending information about a third frequency to a remote device comprises:
sending a fourth message to the remote device, wherein the fourth message comprises the information about the third frequency.

23. The method according to claim 22, wherein
the fourth message is a discovery message or a PC5 RRC message.

24. The method according to claim 22 or 23, wherein the third frequency is the frequency of the cell on which the first relay device can camp, and the method further comprises:
after establishing a connection to the remote device, receiving first indication information from the remote device, and reselecting a cell at the third frequency based on the first indication information; or
receiving second indication information from a first access network device, and handing over to a cell at the third frequency based on the second indication information.

25. The method according to claim 21, wherein the method comprises:
receiving a fifth message from the remote device, wherein the fifth message is used to query frequency information of the cell in which the first relay device is located, or is used to query frequency information of the cell on which the first relay device can camp, or is used to query whether the first relay device has camped on or can camp on a cell at the third frequency; and
the sending information about a third frequency to a remote device comprises: sending a sixth message to the remote device, wherein the sixth message comprises the information about the third frequency, or the sixth message indicates that the first relay device has camped on or can camp on the cell at the third frequency.

26. The method according to claim 25, wherein the third frequency is the frequency of the cell on which the first relay device can camp, and the method further comprises:
reselecting the cell at the third frequency.

27. The method according to any one of claims 21 to 26, wherein the method further comprises:
after establishing the connection to the remote device, sending, to the remote device, a PCI of the cell in which the first relay device is located.

28. A communication device, comprising:
one or more processors;
one or more memories; and
one or more computer programs, wherein the one or more computer programs are stored in the one or more memories, the one or more computer programs comprise instructions, and when the instructions are executed by the one or more processors of the communication device, the communication device is enabled to perform the method according to any one of claims 1 to 8, or the communication device is enabled to perform the method according to claim 9, or the communication device is enabled to perform the method according to any one of claims 10 to 20, or the communication device is enabled to perform the method according to any one of claims 21 to 27.

29. A computer-readable storage medium, wherein the computer-readable storage medium is configured to store a computer program, and when the computer program is run on a computer, the computer is enabled to perform the method according to any one of claims 1 to 8, or the computer is enabled to perform the method according to claim 9, or the computer is enabled to perform the method according to any one of claims 10 to 20, or the computer is enabled to perform the method according to any one of claims 21 to 27.

30. A chip, comprising one or more processors and a communication interface, wherein the one or more processors are configured to read instructions, to perform the method according to any one of claims 1 to 8, or perform the method according to claim 9, or perform the method according to any one of claims 10 to 20, or perform the method according to any one of claims 21 to 27.
